(19)

Europäisches
Patentamt
European
Patent Office
Office européen
des brevets

(11)  **EP 4 682 606 A2**

(12)  **EUROPEAN PATENT APPLICATION**

(43) Date of publication:
21.01.2026   Bulletin 2026/04

(21) Application number: 25204266.8

(22) Date of filing: 24.09.2025

(51) International Patent Classification (IPC):
*G02B 9/62* (2006.01)      *G02B 13/00* (2006.01)
*G02B 13/02* (2006.01)

(52) Cooperative Patent Classification (CPC):
**G02B 13/0045; G02B 9/62; G02B 13/0065;
G02B 13/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **26.09.2024   CN 202411357251**

(71) Applicant: **Jiangxi OFILM Optical Co., Ltd.
Nanchang, Jiangxi 330096 (CN)**

(72) Inventors:
• **ZHANG, Chenglin
Nanchang, 330096 (CN)**
• **LIU, Binbin
Shenzhen, 518106 (CN)**

(74) Representative: **Metida
Gyneju str. 16
01109 Vilnius (LT)**

(54)  **OPTICAL SYSTEM, IMAGE MODULE, AND ELECTRONIC DEVICE**

(57)   An optical system (100) includes a first lens group (G1) comprising a first lens (L1), a second lens (L2), and a third lens (L3), a second lens group (G2) comprising a fourth lens (L4), a fifth lens (L5), and a sixth lens (L6), and an image plane (IMG). Near the optical axis (O), object side surfaces of the first, second, third, and fifth lenses and an imaging side surface (S6) of the third lens (L3) are convex, imaging side surfaces of the second, fourth and fifth lenses and an object side surface (S11) of the sixth lens (L6) are concave. The first lens group (G1) is fixed relative to the image plane (IMG), the second lens group (G2) is movably arranged between the first lens group (G1) and the image plane (IMG). The optical system (100) satisfies: 5deg<FOV<20deg and 1.5<FNO<3.2.

FIG.1A

**Description**

FIELD

The present invention relates to field of imaging, and in particular to an optical system, an image module, and an electronic device.

BACKGROUND

With the increasing miniaturization requirements for smart terminals such as mobile phones and tablet computers, the design of optical systems installed in these devices has also faced new challenges. In related technologies, the focusing method of optical systems is generally achieved by moving the entire lens through a focusing motor to align the imaging surface with the photosensitive surface of the photosensitive chip. Therefore, a large space (mechanical back focus) needs to be reserved between the lens and the photosensitive chip. This not only hinders the miniaturization design of the lens module but also requires a relatively high force from the focusing motor to move the entire lens, resulting in a larger motor size and a significant decrease in focusing speed.

SUMMARY

The present disclosure discloses an optical system, an image module, and an electronic device, which may reduce an impact on focusing speed while maintaining a compact design.
In order to achieve the above objects, in a first aspect, the present application discloses an optical system. The optical system sequentially includes a first lens group, a second lens group, and an image plane from an object side to an imaging side along an optical axis.
The first lens includes a first lens, a second lens, and a third lens arranged in sequence along the optical axis from the object side to the image side. The first lens has positive refractive power, an object side surface of the first lens is convex near the optical axis, the second lens has negative refractive power, an object side surface of the second lens is convex near the optical axis, an imaging side surface of the second lens is concave near the optical axis, the third lens has positive refractive power, and an object side surface and an imaging side surface of the third lens are convex near the optical axis.
The second lens group includes a fourth lens, a fifth lens, and a sixth lens arranged in sequence along the optical axis from the object side to the image side. The fourth lens has negative refractive power, an imaging side surface of the fourth lens is concave near the optical axis, the fifth lens has positive refractive power, an object side surface of the fifth lens is convex near the optical axis, an imaging side surface of the fifth lens is concave near the optical axis, the sixth lens has negative refractive power, and an object side surface of the sixth lens is concave near the optical axis.
The first lens group is fixed relative to the image plane of the optical system, the second lens group is movably arranged between the first lens group and the image plane of the optical system to move along a direction of the optical axis.
The optical system satisfies following conditional expressions: 5deg<FOV<20deg, and 1.5<FNO<3.2. wherein, FOV is the maximum field of view angle of the optical system, and FNO is an aperture number of the optical system.
In a second aspect, the present application discloses an image module. The image module includes an imaging sensor and the above-mentioned optical system, the imaging sensor is arranged on the imaging side of the optical system. The image module with the above optical system may reduce the impact on the focusing speed while taking into account the miniaturization design.
In a third aspect, the present application discloses an electronic device. The electronic device includes a housing and the above-mentioned image module, the image module is arranged in the housing. The electronic device with the above-mentioned image module may reduce the impact on the focusing speed while taking into account the miniaturization design.
Compared with the existing technology, the beneficial effects of the present application lie in that: in the optical system provided by the present application, in order to achieve miniaturized design and also reduce the impact on the focusing speed, the six lenses are divided into the first lens group and the second lens group, and the first lens group is fixed relative to the image plane of the optical system, while the second lens group can move along the optical axis between the first lens group and the image plane of the optical system. Thus, the optical system can have a continuous internal focusing function. Moreover, by only moving the second lens group, the burden on the motor can be further reduced, achieving the effect of rapid internal focusing of the optical system even when using a motor with lower power. Additionally, using six lenses with refractive power can evenly distribute the pressure of light refraction to each lens, reducing the task of refracting light for each individual lens and avoiding excessive curvature of the lenses, which increases the sensitivity to manufacturing tolerances. Specifically, the first lens has positive refractive power, combined with its convex object side surface near the optical axis, it can facilitate better entry of light into the first lens. The second lens has negative refractive power, and its object side and image side surfaces are convex and concave near the optical axis, respectively, which can help correct the aberrations produced by the first lens and improve the imaging performance of the optical system. The third lens has positive refractive power, and both its object side and image side surfaces are convex near the optical axis, which can help reduce the incident angle of light entering the optical system, allowing as much light as possible to enter the optical system. The fourth lens has negative refractive power, and its image side surface is concave near the optical axis, which can help correct spherical aberration, coma aberration, and distortion produced by the first lens group, further improving the imaging quality of the optical system. The fifth lens has positive refractive power, and its object side and image side surfaces are convex and concave near the optical axis, respectively, which can help correct distortion and astigmatism. The sixth lens has negative refractive power, and its object side surface is concave near the optical axis, which can facilitate the correction of chromatic aberration and thereby improve the imaging quality of the optical system.

In addition, when the optical system satisfies the conditional expressions 5deg < FOV < 20deg, and 1.5 < FNO < 3.2, the large aperture imaging may be achieved.

BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1A is a schematic structure diagram of an optical systemsystem in a far focus state of a first embodiment of the present application.

FIG. 1B is a longitudinal spherical aberration diagram (mm), astigmatism curve diagram (mm) and distortion diagram (%) of the optical system in the far focus state of the first embodiment of the present application.

FIG. 2A is a schematic structure diagram of an optical system in a near focus state of the first embodiment of the present application.

FIG. 2B is a longitudinal spherical aberration diagram (mm), astigmatism curve diagram (mm) and distortion diagram (%) of the optical system in the near focus state of the first embodiment of the present application.

FIG. 3A is a schematic structure diagram of an optical system in a far focus state of a second embodiment of the present application.

FIG. 3B is a longitudinal spherical aberration diagram (mm), astigmatism curve diagram (mm) and distortion diagram (%) of the optical system in the far focus state of the second embodiment of the present application.

FIG. 4A is a schematic structure diagram of an optical system in a near focus state of the second embodiment of the present application.

FIG. 4B is a longitudinal spherical aberration diagram (mm), astigmatism curve diagram (mm) and distortion diagram (%) of the optical system in the near focus state of the second embodiment of the present application.

FIG. 5A is a schematic structure diagram of an optical system in a far focus state of a third embodiment of the present application.

FIG. 5B is a longitudinal spherical aberration diagram (mm), astigmatism curve diagram (mm) and distortion diagram (%) of the optical system in the far focus state of the third embodiment of the present application.

FIG. 6A is a schematic structure diagram of an optical system in a near focus state of the third embodiment of the present application.

FIG. 6B is a longitudinal spherical aberration diagram (mm), astigmatism curve diagram (mm) and distortion diagram (%) of the optical system in the near focus state of the third embodiment of the present application.

FIG. 7A is a schematic structure diagram of an optical system in a far focus state of a fourth embodiment of the present application.

FIG. 7B is a longitudinal spherical aberration diagram (mm), astigmatism curve diagram (mm) and distortion diagram (%) of the optical system in the far focus state of the fourth embodiment of the present application.

FIG. 8A is a schematic structure diagram of an optical system in a near focus state of the fourth embodiment of the present application.

FIG. 8B is a longitudinal spherical aberration diagram (mm), astigmatism curve diagram (mm) and distortion diagram (%) of the optical system in the near focus state of the fourth embodiment of the present application.

FIG. 9A is a schematic structure diagram of an optical system in a far focus state of a fifth embodiment of the present application.

FIG. 9B is a longitudinal spherical aberration diagram (mm), astigmatism curve diagram (mm) and distortion diagram (%) of the optical system in the far focus state of the fifth embodiment of the present application.

FIG. 10A is a schematic structure diagram of an optical system in a near focus state of the fifth embodiment of the present application.

FIG. 10B is a longitudinal spherical aberration diagram (mm), astigmatism curve diagram (mm) and distortion diagram (%) of the optical system in the near focus state of the fifth embodiment of the present application.
FIG. 11 is a schematic diagram of an image module of an embodiment of the present application.
FIG. 12 is a schematic diagram of an electronic device of an embodiment of the present application.

DETAILED DESCRIPTION

The following will describe the technical solutions of the embodiments of the present disclosure clearly and completely in combination with the accompanying drawings of the embodiments of the present disclosure. Obviously, the described embodiments are only part of the embodiments of the present disclosure, not all of them. Based on the embodiments of the present disclosure, those skilled in the art can make various modifications or variations without departing from the spirit or scope of the present disclosure. All other embodiments obtained by persons of ordinary skill in the art without making creative efforts fall within the scope of protection of the present disclosure.

In addition, the terms "first", "second", etc. are mainly used to distinguish different devices, components, or parts (the specific types and constructions may be the same or different), and are not intended to indicate or imply the relative importance and quantity of the indicated devices, components, or parts. Unless otherwise specified, "multiple" means two or more.

The technical solution of the present application will be further explained in conjunction with the embodiments and accompanying drawings.

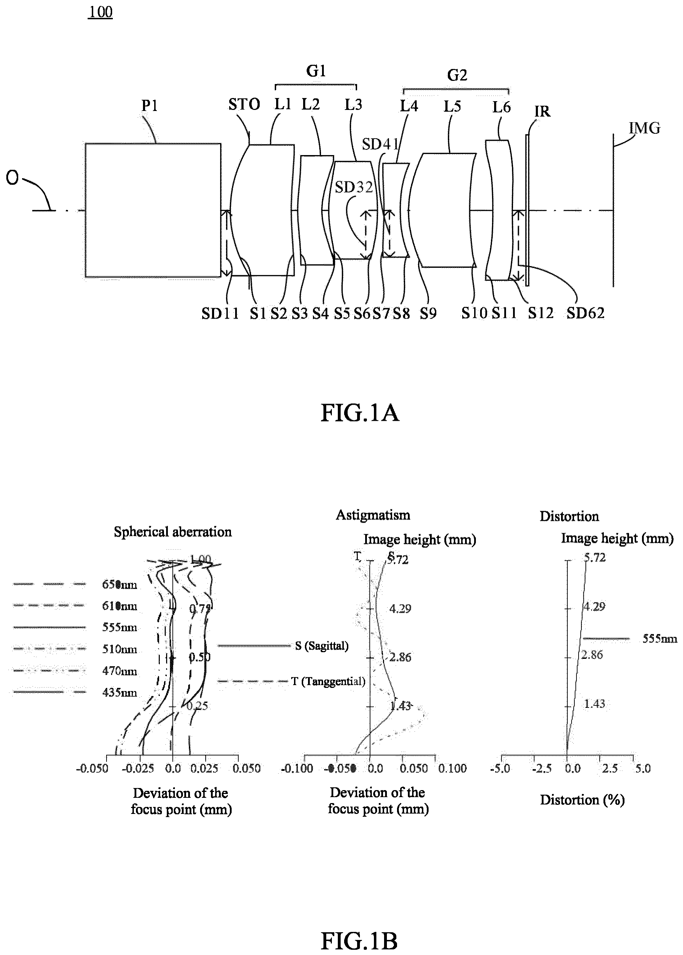

Referring to FIG. 1A and FIG. 1B, in some embodiments of the present application, an optical system 100 includes a first lens group G1 and a second lens group G2 arranged in sequence from along an optical axis O from an object side to an imaging side. The first lens group G1 includes a first lens L1, a second lens L2 and a third lens L3 arranged in sequence along the optical axis O from the object side to the image side. The second lens group G2 includes a fourth lens L4, a fifth lens L5 and a sixth lens L6 arranged in sequence along the optical axis O from the object side to the image side. The first lens group G1 is fixed relative to an image plane IMG of the optical system 100, and the second lens group G2 moves along a direction of the optical axis between the first lens group G1 and the image plane IMG of the optical system 100, thereby allowing the optical system 100 to have a continuous internal focusing function. At the same time, only by moving the second lens group G2, the burden on a motor of the optical system 100 may be further reduced, and the rapid internal focusing effect of the optical system 100 may be achieved even when a lower power motor is used.

The first lens L1 has positive refractive power, the second lens L2 has negative refractive power, the third lens L3 has positive refractive power, the fourth lens L4 has negative refractive power, the fifth lens L5 has positive refractive power, and the sixth lens L6 has negative refractive power. During imaging, light enters the first lens L1, the second lens L2, the third lens L3, the fourth lens L4, the fifth lens L5, and the sixth lens L6 in that sequence from the object side of the first lens L1 and finally forms an image on an image plane IMG of the optical system 100.

Further, an object side surface S1 of the first lens L1 is convex near the optical axis O, an imaging side surface S2 of the first lens L1 is concave or convex near the optical axis O, an object side surface S3 of the second lens L2 is convex near the optical axis O, an imaging side surface S4 of the second lens L2 is concave near the optical axis O, an object side surface S5 and an imaging side surface S6 of the third lens L3 are convex near the optical axis O, an object side surface S7 of the fourth lens L4 is concave or convex near the optical axis O, an imaging side surface S8 of the fourth lens L4 is concave near the optical axis O, an object side surface S9 of the fifth lens L5 is convex or concave near the optical axis O, an imaging side surface S10 of the fifth lens L5 is concave near the optical axis O, an object side surface S11 of the sixth lens L6 is concave near the optical axis O, and an imaging side surface S12 of the sixth lens L6 is concave or convex near the optical axis O.

By designing the refractive power and surface shape of the six lenses, specifically, the first lens L1 has positive refractive power, and its object side surface is convex near the optical axis, which is conducive to the convergence of light within the field of view; the second lens L2 has negative refractive power, and its object side surface S3 and imaging side surface are convex and concave near the optical axis respectively, which is conducive to correcting the aberration generated by the first lens L1; the third lens L3 has positive refractive power, and both its object side surface and imaging side surface are convex near the optical axis, which is conducive to reducing the light incident from the front lens into the optical system 100, thereby reducing the incident angle of the light; the fourth lens L4 has negative refractive power, and its object side surface is concave near the optical axis, which is conducive to correcting the spherical aberration, coma aberration and distortion generated by the first lens group; the fifth lens L5 has positive refractive power, and its object side surface and imaging side surface are convex and concave near the optical axis respectively, which is conducive to correcting distortion and astigmatism; the sixth lens L6 has negative refractive power, and its object side surface is concave near the optical axis, which can effectively correct aberration and also control the exit angle of the light. In addition, among the six lenses of the optical system 100, multiple lenses adopt the concave-convex lens design, which may effectively reduce a total length of the optical system 100 and is conducive to the miniaturization design of the optical system 100. It can be understood that the present application only provides a preferred solution for the refractive power and surface shape design of each lens of the optical system 100. In other embodiments, the surface shape design of the optical system 100 may also adopt other schemes, due to the limitation of space, all the schemes cannot be listed here, and any combination is also feasible.

In some embodiments, the optical system 100 may be applied to electronic devices such as smart phones and smart tablets. Therefore, the materials of the first lens L1, the second lens L2, the third lens L3, the fourth lens L4, the fifth lens L5 and the sixth lens L6 may be plastic, so as to achieve the lightweight of the optical system 100 and be more conducive to the processing of complex surface shapes of the lenses. It can be understood that, in other embodiments, when the optical system 100 is applied to electronic devices such as vehicle-mounted devices and dash cameras or used as a camera on a car, the first lens L1, the second lens L2, the third lens L3, the fourth lens L4, the fifth lens L5 and the sixth lens L6 may be glass lenses, thereby achieving good optical effects and reducing the temperature sensitivity of the optical system 100.

In some embodiments, the optical system 100 may further include a prism P1, which may be located on the object side of the first lens L1, thereby allowing the optical system 100 to be a periscope optical system.

In some embodiments, the optical system 100 may further include an aperture STO, which may be an aperture stop and/or a field stop. The aperture STO may be placed between the prism P1 and the object side surface S1 of the first lens L1. It can be understood that in other embodiments, the aperture STO may be placed between other two lenses, for example, the aperture STO may be placed between the fourth lens L4 and the fifth lens L5, the specific placement can be adjusted according to the actual situation, and is not specifically limited in this embodiment.

In some embodiments, the optical system 100 may further include an filter IR, the filter IR is located in the second lens group G2 and between the sixth lens L6 and the image plane IMG of the optical system 100. The filter IR can move along the direction of the optical axis between the sixth lens L6 and the image plane IMG of the optical system 100 under the drive of the second lens group G2. Thus, the filter IR can move follow the movement of the second lens group G2. When the optical system 100 is applied to a camera module, compared with the related technology of placing the filter IR on an image sensor, it may effectively simplify the packaging of the image sensor and also facilitate the thin and light design of the image sensor. In some embodiments, the filter IR may be an infrared cut-off filter to filter out infrared light, which improves the imaging quality, and allows the imaging more in line with human visual experience. It can be understood that the filter IR may be made of optical glass with a coating, or colored glass, or other materials, the specific choice can be made according to actual needs, and no specific limitations are made in this embodiment.

In some embodiments, the optical system 100 may satisfy the following conditional expression: $5deg<FOV<20deg$. Wherein, FOV is the maximum field of view angle of the optical system 100. When the optical system 100 satisfies the conditional expression $5deg<FOV<20deg$, the optical system 100 may achieve a small field of view and telephoto effect. In some embodiments, the optical system 100 may further satisfy $10deg<FOV<16deg$, thus, the small field of view and telephoto effect of the optical system 100 are more prominent.

In some embodiments, the optical system 100 may satisfy the following conditional expression: $1.5<FNO<3.2$. Wherein, FNO is an aperture number of the optical system 100. In this way, the optical system 100 may have a large aperture characteristic. In some embodiments, the optical system 100 may further satisfy $1.7<FNO<3$, thus, the large aperture characteristic of the optical system 100 is more prominent.

In some embodiments, the optical system 100 may satisfy the following conditional expression: $1.1<FNOz1/FNOz2<1.7$. Wherein, $FNOz1$ is the aperture number of the optical system 100 in a near focus state, and $FNOz2$ is the aperture number of the optical system 100 in a far focus state. When the optical system 100 satisfies the above conditional expression, the aperture number of the optical system 100 in the near focus state and the aperture number of the optical system 100 the far focus state are close, thereby allowing the optical system 100 to maintain a large aperture characteristic regardless of whether the optical system 100 is in the far focus state or the near focus state. In some embodiments, the optical system 100 may further satisfy $1.2<FNOz1/FNOz2<1.5$, thus, it is more conducive to achieving a large aperture characteristic of the optical system 100 in different states.

In some embodiments, the optical system 100 may satisfy the following conditional expression: $2.0<Bz2/Bz1$. Wherein, $Bz1$ is a distance along the optical axis from the imaging side surface S6 of the third lens L3 to the object side surface S7 of the fourth lens L4 when the optical system 100 is in the near focus state, and $Bz2$ is a distance along the optical axis from the imaging side surface S6 of the third lens L3 to the object side surface S7 of the fourth lens L4 when the optical system 100 is in the far focus state. By moving the second lens group G2, in-focus imaging may be achieved while correcting the image quality performance at different object distances. When the optical system 100 satisfies the conditional expression $2.5<Bz2/Bz1$, the movement amount of the second lens group G2 from the far focus state to the near focus state may be effectively controlled, thereby reducing the movement stroke of the second lens group G2 and effectively ensuring the driving force of the motor, reducing the impact on the focusing speed. In some embodiments, the optical system 100 may further satisfy $3<Bz2/Bz1<13$. In this way, the movement stroke of the second lens group G2 is reasonable, thereby further reducing the impact on the focusing speed.

In some embodiments, the optical system 100 may satisfy the following conditional expression: $1.35<fz1/fz2<2$. Wherein, $fz1$ is a focal length of the optical system 100 in the near focus state, and $fz2$ is a focal length of the optical system

100 in the far focus state. When the optical system 100 satisfies the above conditional expression, the refractive power of the optical system 100 can be reasonably distributed between the near focus state and the far focus state, thereby allowing the refractive power of the optical system 100 to be reasonable. In some embodiments, the optical system 100 may further satisfy $1.4<fz1/fz2<1.7$, thereby achieving a more appropriate distribution of refractive power.

In some embodiments, the optical system 100 may satisfy the following conditional expression: $0.7<DLmax/TTL<1$. Wherein, DLmax is the maximum distance along the optical axis from the object side surface S1 of the first lens L1 to the imaging side surface S12 of the sixth lens L6, and TTL is a distance along the optical axis from the object side surface S1 of the first lens L1 to the image plane IMG of the optical system 100 (i.e., the total length of the optical system 100). When the optical system 100 satisfies the conditional expression $0.7<DLmax/TTL<1$, it can achieve a compact design while reducing the space occupied by the lens part of the optical system 100, thereby leaving sufficient space for the second lens group G2 to focus at different working object distances (i.e., far focus and near focus), thereby allowing the optical system 100 to achieve cost savings and compact arrangement under the condition of enabling internal focusing. In some embodiments, the optical system 100 may further satisfy $0.8<DLmax/TTL<1$, thereby further leaving sufficient space for the second lens group to focus at different working object distances, and further facilitating a flexible layout of the first and second lens groups of the optical system 100.

In some embodiments, the optical system 100 may satisfy the following conditional expression: $0.8<TTL/fmax<1.3$. Wherein, fmax is the maximum focal length of the optical system 100, so that the optical system 100 may provide a lower lens height within FOV<20deg, thereby further achieving better telephoto effects while achieving a compact design. In some embodiments, the optical system 100 may further satisfy $0.95<TTL/fmax<1.2$, thereby providing even better telephoto effects.

In some embodiments, the optical system 100 may satisfy the following conditional expression: $3.3<TTL/ImgH<6$. Wherein, ImgH is half of an image height corresponding to the maximum field of view of the optical system 100. By limiting a ratio of the total length of the optical system 100 to half of the image height corresponding to the maximum field of view, the optical system 100 may maintain good imaging performance while achieving a compact design, furthermore, the optical system 100 may approach long focal length characteristics and have sufficient structural layout space. In some embodiments, the optical system 100 may further satisfy $3.8<TTL/ImgH<5.5$, thereby allowing the optical system 100 to more closely approach the long focal length characteristics and facilitating the structural layout.

In some embodiments, the optical system 100 may satisfy the following conditional expression: $0.8<TD123/TD456<1.5$. Wherein, TD123 is a distance from the object side surface S1 of the first lens L1 to the imaging side surface S6 of the third lens L3 along the optical axis, and TD456 is a distance from the object side surface S7 of the fourth lens L4 to the imaging side surface S12 of the sixth lens L6 along the optical axis. When the optical system 100 satisfies the above conditional expression, the overall thickness of the first lens group and the second lens group may be effectively controlled, thereby facilitating the control of the total length of the optical system 100 and contributing to the miniaturization design of the optical system 100. In some embodiments, the optical system 100 may further satisfy $0.95<TD123/TD456<1.3$, which is further beneficial to the miniaturization design of the optical system 100.

In some embodiments, the optical system 100 may satisfy the following conditional expression: $1.1<TTL/(TD123+TD456)<1.7$. In this way, when the optical system 100 switches between the near focus state and the far focus state, it can switch within a range of the total length of the optical system 100, and the total length difference is not significant, which may effectively control a movement distance of the second lens group, thereby achieving internal focusing. In some embodiments, the optical system 100 may further satisfy $1.3<TTL/(TD123+TD456)<1.5$, thereby further controlling the movement distance of the second lens group G2.

In some embodiments, the optical system 100 may satisfy the following conditional expression: $0.55<SD11/ImgH<1.1$. Wherein, SD11 is half of the maximum effective aperture of the object side surface S1 of the first lens L1. When the optical system 100 satisfies the above conditional expression, a ratio of the head diameter of the optical system 100 to the image plane IMG may be reasonably controlled, thereby achieving the convergence of light within the field of view, and the half of the maximum effective aperture of the object side surface S1 of the first lens L1 may allow to match a size of the image plane IMG of the optical system 100, which is beneficial to improving the space utilization rate of the optical system 100. In some embodiments, the optical system 100 may further satisfy $0.65<SD11/ImgH<0.9$, thereby allowing the diameter of the object side surface S1 of the first lens L1 and the size of the imaging surface IMG of the optical system 100 more closely matched, which is more beneficial to improving the space utilization rate of the optical system 100.

In some embodiments, the optical system 100 may satisfy the following conditional expression: $0.7<SD62/ImgH<1.2$. Wherein, SD62 is half of the maximum effective aperture of the imaging side surface S12 of the sixth lens L6. When the optical system 100 satisfies the above conditional expression, it can reasonably control a ratio of the half of the maximum effective aperture of the sixth lens L6 to the image plane IMG of the optical system 100, thereby allowing the light passing through the sixth lens L6 to smoothly enter the image plane IMG, which is beneficial to improving the imaging effect of the optical system 100. Additionally, it can also allow the half of the maximum effective aperture of the imaging side surface S12 of the sixth lens L6 to match the size of the image plane of the optical system 100, which is more conducive to the entry of light. In some embodiments, the optical system 100 may further satisfy 0.8<SD62/ImgH<1, thereby allowing the half of the maximum effective aperture of the imaging side surface S12 of the sixth lens L6 and the size of the image plane of the optical system 100 to be more compatible.

In some embodiments, the optical system 100 may satisfy the following conditional expression: 0.8<SD32/SD41<1.2. Wherein, SD32 is half of the maximum effective aperture of the imaging side surface S6 of the third lens L3, and SD41 is half of the maximum effective aperture of the object side surface S7 of the fourth lens L4. When the optical system 100 satisfies the conditional expression 1.2<SD32/SD41<1.5, that is, the half of the maximum effective aperture of the imaging side surface S6 of the third lens L3 is greater than that of the object side surface S7 of the fourth lens L4. On the one hand, it can allow the half of the maximum effective aperture of the imaging side surface S6 of the third lens L3 and the half of the maximum effective aperture of the object side surface S7 of the fourth lens L4 to be not too different, thereby controlling the step difference formed between them and allowing the transition of light between the third lens L3 and the fourth lens L4 to be smoother. On the other hand, it is also beneficial to reduce the movement stroke of the second lens group and simultaneously reduce the spherical aberration and coma aberration introduced by the first lens group, which is conducive to improving the imaging quality of the optical system 100. In some embodiments, the optical system 100 may further satisfy 0.9<SD32/SD41<1.1, thereby allowing the step difference between the third lens L3 and the fourth lens L4 to be smaller and allowing a transition between the third lens L3 and the fourth lens L4 to be smoother.

In some embodiments, the optical system 100 may satisfy the following conditional expression: 0.7<SD11/CT1<1.5. Wherein, SD11 is the half of the maximum effective aperture of the object side surface S1 of the first lens L1, and CT1 is a thickness of the first lens L1 at the optical axis. By limiting a ratio of the half of the maximum effective aperture of the object side surface S1 of the first lens L1 to the center thickness of the first lens L1, a surface shape of the first lens L1 may be effectively controlled, and at the same time, the center thickness of the first lens L1 may be reasonable, which facilitates the convergence of incident light within the field of view and is also conducive to the processing and molding of the first lens L1, thereby allowing the thickness design of the first lens L1 to be reasonable and reducing the processing difficulty of the first lens L1. In some embodiments, the optical system 100 may further satisfy 0.9<SD11/CT1<1.3, which is more beneficial for the processing and molding of the first lens L1.

In some embodiments, the optical system 100 may satisfy the following conditional expression: 0.4<CT123/ΣCT<0.7. Wherein, CT123 is a sum of the thicknesses of the first lens L1, the second lens L2, and the third lens L3 at the optical axis (i.e., an overall thickness of the first lens group), and ΣCT is a sum of the thicknesses of the first lens L1, the second lens L2, the third lens L3, the fourth lens L4, the fifth lens L5, and the sixth lens L6 at the optical axis. By limiting a ratio of the overall thickness of the first lens group to an overall thickness of the first and second lens groups, the overall thickness of the first lens group may be reasonably controlled, which ensures that the overall thickness of the first lens group and an overall thickness of the second lens group do not differ too much, thereby facilitating the processing and assembly of the first and second lens groups while achieving the miniaturization of the optical system 100. In some embodiments, the optical system 100 may further satisfy 0.45<CT123/ΣCT<0.65, which may better control the overall thickness of the first lens group, thereby facilitating the miniaturization design of the optical system 100.

In some embodiments, the optical system 100 may satisfy the following conditional expression: 0.3<CT456/ΣCT<0.6. Wherein, CT456 is a sum of the thicknesses of the fourth lens L4, the fifth lens L5, and the sixth lens L6 at the optical axis (i.e., the overall thickness of the second lens group). In this way, the overall thickness of the second lens group is roughly controlled at about half of the sum of the overall thickness of the first lens group and the overall thickness of the second lens group, so that the overall thickness of the second lens group may be reasonable controlled, which ensures that the overall thickness of the first lens group and the overall thickness of the second lens group do not differ too much, thereby facilitating the processing and assembly of the first and second lens groups while facilitating the miniaturization of the optical system 100. In some embodiments, the optical system 100 may further satisfy 0.37<CT456/ΣCT<0.53, which may better control the overall thickness of the second lens group, thereby facilitating the miniaturization design of the optical system 100.

In some embodiments, the optical system 100 may satisfy the following conditional expression: 1.4<CT1/CT2<3.5. Wherein, CT2 is a thickness of the second lens L2 at the optical axis. By limiting a ratio of the thickness of the first lens L1 at the optical axis to the thickness of the second lens L2 at the optical axis, the thicknesses of the first lens L1 and the second lens L2 may be reasonably controlled, thereby achieving the miniaturization design of the optical system 100 and also reducing the sensitivity of the optical system 100. In some embodiments, the optical system 100 may further satisfy 0.7<CT1/CT2<3, which allows the thickness of the first lens L1 to be larger and reduces the sensitivity of the optical system 100.

In some embodiments, the optical system 100 may satisfy the following conditional expression: 0.7<CT3/CT2<3. Wherein, CT3 is a thickness of the third lens L3 at the optical axis. When the above conditional expression is satisfied, the thicknesses of the third lens L3 and the second lens L2 may be effectively controlled, thereby achieving the miniaturization design of the optical system 100 and also facilitating a reduction in the sensitivity of the optical system 100. In some embodiments, the optical system 100 may further satisfy 0.9<CT3/CT2<2.5, so that the thickness difference between the third lens L3 and the second lens L2 is not too large, further reducing the sensitivity of the optical system 100.

In some embodiments, the optical system 100 may satisfy the following conditional expression: 2<CT5/CT4<5. Wherein, CT4 is a thickness of the fourth lens L4 at the optical axis, and CT5 is a thickness of the fifth lens L5 at the optical axis. When the above conditional expression is satisfied, the thicknesses of the fifth lens L5 and the fourth lens L4 may be effectively controlled, thereby achieving the miniaturization design of the optical system 100 and also facilitating a reduction in the sensitivity of the optical system 100. In some embodiments, the optical system 100 may further satisfy 2.4<CT5/CT4<4, so that the thickness of the fifth lens L5 is larger, and the sensitivity of the optical system 100 is lower.

In some embodiments, the optical system 100 may satisfy the following conditional expression: 0.5<CT4/CT6<1.1. Wherein, CT6 is a thickness of the sixth lens L6 at the optical axis. When the above conditional expression is satisfied, the thicknesses of the fourth lens L4 and the sixth lens L6 may be effectively controlled, thereby achieving the miniaturization design of the optical system 100 and also facilitating a reduction in the sensitivity of the optical system 100. In some embodiments, the optical system 100 may further satisfy 0.6<CT4/CT6<0.9, so that the thickness difference between the fourth lens L4 and the sixth lens L6 is not too large, thereby facilitating the reduction in the sensitivity of the optical system 100.

In some embodiments, the optical system 100 may satisfy the following conditional expression: 1.2<CT5/CT6<4. When the above conditional expression is satisfied, the thicknesses of the fifth lens L5 and the sixth lens L6 may be effectively controlled, thereby achieving the miniaturization design of the optical system 100 and also facilitating a reduction in the sensitivity of the optical system 100. In some embodiments, the optical system 100 may further satisfy 1.6<CTS/CT6<3.3, so that the thickness of the fifth lens L5 is larger, and the sensitivity of the optical system 100 is lower.

In some embodiments, the optical system 100 may satisfy the following conditional expression: $0.15<CT5/\sum CT<0.35$. When the above conditional expression is satisfied, the thickness of the fifth lens L5 may be effectively allocated, thereby achieving the miniaturization design of the optical system 100 and also facilitating a reduction in the sensitivity of the optical system 100. In some embodiments, the optical system 100 may further satisfy $0.2<CT5/\sum CT<0.3$, thereby further facilitating a control of a thickness ratio of the fifth lens L5 and reducing the sensitivity of the optical system 100.

In some embodiments, the optical system 100 may satisfy the following conditional expression: 0.4<f1/fmax<1.5. Wherein, f1 is a focal length of the first lens L1, and fmax is the maximum focal length of the optical system 100. By controlling a ratio of the focal length of the first lens L1 to the maximum focal length of the optical system 100, a refractive power of the first lens L1 may be reasonably distributed, which helps to reduce the spherical aberration, chromatic aberration, and distortion of the first lens group to a reasonable level, reducing the design difficulty of the subsequent lenses, at the same time, improving the overall resolution of the optical system 100, and enhancing the peripheral aberration correction of the optical system 100. Additionally, it is beneficial for the reduction of the size of the first lens group G1, thereby facilitating the formation of a small-sized optical system 100. In some embodiments, the optical system 100 may further satisfy 0.5<f1/fmax <1.3, so that the size of the first lens group G1 may be further compressed, thereby facilitating the miniaturization design of the optical system 100.

In some embodiments, the optical system 100 may satisfy the following conditional expression: -0.9<f2/fmax<-0.3. Wherein, f2 is a focal length of the second lens L2. By controlling a ratio of the focal length of the second lens L2 to the maximum focal length of the optical system 100, the second lens L2 may have a reasonable refractive power, which helps to reduce the combined spherical aberration, chromatic aberration, and distortion of the first lens group to a reasonable level, reduces the design difficulty of the subsequent lenses, and simultaneously improves the overall resolution of the optical system 100 and enhances the peripheral aberration correction of the optical system 100. Additionally, it is beneficial for compressing the size of the first lens group, thereby facilitating the formation of a small-sized optical system 100. In some embodiments, the optical system 100 may further satisfy -0.7<f2/fmax<-0.4, thereby further compressing the size of the first lens group G1 and facilitating the miniaturization design of the optical system 100.

In some embodiments, the optical system 100 may satisfy the following conditional expression: 0.25<f3/fmax<0.6. Wherein, f3 is a focal length of the third lens L3. By controlling a ratio of the focal length of the third lens L3 to the maximum focal length of the optical system 100, the third lens L3 may have a reasonable refractive power, which helps to reduce the combined spherical aberration, chromatic aberration, and distortion of the first lens group to a reasonable level, reduces the design difficulty of the subsequent lenses, and simultaneously improves the overall resolution of the optical system 100 and enhances the peripheral aberration correction of the optical system 100. Additionally, it is beneficial for compressing the size of the first lens group, thereby facilitating the formation of a small-sized optical system 100. In some embodiments, the optical system 100 may further satisfy 0.3<f3/fmax<0.45, which can improve the imaging quality of the optical system 100 while achieving the miniaturization design of the optical system 100.

In some embodiments, the optical system 100 may satisfy the following conditional expression: -1.2<f4/fmax<-0.25. Wherein, f4 is a focal length of the fourth lens L4. By controlling a ratio of the focal length of the fourth lens L4 to the maximum focal length of the optical system 100, the fourth lens L4 may have a reasonable refractive power, which helps to reduce the combined spherical aberration, chromatic aberration, and distortion of the second lens group to a reasonable level, reduces the design difficulty of the subsequent lenses, and simultaneously improves the overall resolution of the optical system 100 and enhances the peripheral aberration correction of the optical system 100.

Additionally, it is beneficial for compressing the size of the second lens group, thereby facilitating the formation of a small-sized optical system 100. In some embodiments, the optical system 100 may further satisfy -1<f4/fmax<-0.3, which can improve the imaging quality of the optical system 100 while achieving the miniaturization design of the optical system 100.

In some embodiments, the optical system 100 may satisfy the following conditional expression: 0.5<f5/fmax<3.2. Wherein, f5 is a focal length of the fifth lens L5. By controlling a ratio of the focal length of the fifth lens L5 to the maximum focal length of the optical system 100, the fifth lens L5 may have a reasonable refractive power, which helps to reduce the combined spherical aberration, chromatic aberration, and distortion of the second lens group to a reasonable level, reduces the design difficulty of the subsequent lenses, and simultaneously improves the overall resolution of the optical system 100 and enhances the peripheral aberration correction of the optical system 100. Additionally, it is beneficial for compressing the size of the second lens group, thereby facilitating the formation of a small-sized optical system 100. In some embodiments, the optical system 100 may further satisfy 0.5<f5/fmax<3.2, which can improve the imaging quality of the optical system 100 while achieving the miniaturization design of the optical system 100.

In some embodiments, the optical system 100 may satisfy the following conditional expression: - 3<f6/fmax<-0.9. Wherein, f6 is a focal length of the sixth lens L6. By controlling a ratio of the focal length of the sixth lens L6 to the maximum focal length of the optical system 100, the sixth lens L6 may have a reasonable refractive power, which helps to reduce the spherical aberration, chromatic aberration and distortion of the second lens group to a reasonable level, reduces the design difficulty of the subsequent lenses, and simultaneously improves the overall resolution of the optical system 100 and enhances the peripheral aberration correction of the optical system 100. Additionally, it is beneficial for compressing the size of the second lens group, thereby facilitating the formation of a small-sized optical system 100. In some embodiments, the optical system 100 may further satisfy -2.3<f6/fmax<-1, which can improve the imaging quality of the optical system 100 while achieving the miniaturization design of the optical system 100.

In some embodiments, the optical system 100 may satisfy the following conditional expression: 0.4<f123/fmax<0.8. Wherein, f123 is a combined focal length of the first lens L1, the second lens L2, and the third lens L3. When the optical system 100 satisfies the conditional expression 0.4<f123/fmax<0.8, the refractive power of the first lens group may be reasonably configured, which prevents the first lens group from generating a large spherical aberration, thereby improving the overall resolution of the optical system 100, and which also helps to compress a distance between the first lens group and the second lens group, thereby helping to form a small-travel internal focusing method. In some embodiments, the optical system 100 may further satisfy 0.5<f123/fmax<0.7, which may reasonably allocate the refractive power of the first lens group G1 and improve the imaging quality of the optical system 100.

In some embodiments, the optical system 100 may satisfy the following conditional expression: - 0.9<f456/fmax<-0.4. Wherein, f456 is a combined focal length of the fourth lens L4, the fifth lens L5, and the sixth lens L6. When the optical system 100 satisfies the conditional expression -0.9<f456/fmax<-0.4, an absolute value of a refractive power of the second lens group is relatively small, which is beneficial for compressing the movement stroke of the second lens group, thereby facilitating continuous focusing from far to near by moving the second lens group. In some embodiments, the optical system 100 may further satisfy -0.8<f456/fmax<-0.5, which may further compress the movement stroke of the second lens group G2 and achieve continuous internal focusing.

In some embodiments, the optical system 100 may satisfy the following conditional expression: - 1.4<f123/f456<-0.6. When the optical system 100 satisfies the conditional expression -1.4<f123/f456<-0.6, the refractive powers of the first and second lens groups may be reasonably configured, which prevents the first lens group from generating a large spherical aberration, thereby improving the overall resolution of the optical system 100 and which is also beneficial for compressing the distance between the first lens group and the second lens group at different object distances, thereby helping to form a small-travel internal focusing method. Additionally, the refractive power of the first lens group is greater than that of the second lens group, which may enhance the light-gathering ability of the optical system 100 and further compress the movement stroke of the second lens group, thereby achieving the miniaturization design of the optical system 100. In some embodiments, the optical system 100 may further satisfy -1.2<F123/F456<-0.8, which may further compress the movement stroke of the second lens group G2 and achieve continuous internal focusing.

In some embodiments, the optical system 100 may satisfy the following conditional expression: 2<fmax/R11<3.5. Wherein, R11 is a radius of curvature of the object side surface S1 of the first lens L1 at the optical axis. When the optical system 100 satisfies the conditional expression 2<fmax/R11<3.5, the complexity of the surface shape of the first lens L1 may be reduced, thereby effectively suppressing the increase of field curvature and distortion, and reducing the molding difficulty of the first lens L1. In some embodiments, the optical system 100 may further satisfy 2.3<fmax/R11<3.2, which can be conducive to the molding of the first lens L1.

In some embodiments, the optical system 100 may satisfy the following conditional expression: 0<fmax/|R12| <1.4. Wherein, R12 is a radius of curvature of the imaging side surface S2 of the first lens L1 at the optical axis. When the optical system 100 satisfies the conditional expression 0<fmax/|R12|<1.4, it can reduce the complexity of the surface shape of the first lens L1, thereby effectively suppressing the increase of field curvature and distortion, and at the same time reducing the molding difficulty of the first lens L1.

In some embodiments, the optical system 100 may satisfy the following conditional expression:

0.9<fmax/R21<2.5. Wherein, R21 is a radius of curvature of the object side surface S3 of the second lens L2 at the optical axis. When the optical system 100 satisfies the above conditional expression, it can reduce the complexity of the surface shape of the second lens L2, thereby effectively suppressing the increase of field curvature and distortion, and at the same time reducing the molding difficulty of the second lens L2. In some embodiments, the optical system 100 may further satisfy 1.1<fmax/R21<2.5, which can be conducive to the molding of the second lens L2.

In some embodiments, the optical system 100 may satisfy the following conditional expression: 3<fmax/R22<7. Wherein, R22 is a radius of curvature of the imaging side surface S4 of the second lens L2 at the optical axis. When the optical system 100 satisfies the above conditional expression, it can reduce the complexity of the surface shape of the second lens L2, thereby effectively suppressing the increase of field curvature and distortion, and at the same time reducing the molding difficulty of the second lens L2. In some embodiments, the optical system 100 may further satisfy 4<fmax/R22<6, which can be conducive to the molding of the second lens L2.

In some embodiments, the optical system 100 may satisfy the following conditional expression: 2<fmax/R31<4. Wherein, R31 is a radius of curvature of the object side surface of the third lens L3 at the optical axis. When the optical system 100 satisfies the above conditional expression, it can reduce the complexity of the surface shape of the third lens L3, thereby effectively suppressing the increase of field curvature and distortion, and at the same time reducing the molding difficulty of the third lens L3. In some embodiments, the optical system 100 may further satisfy 2.3<fmax/R31<3.5, which can be conducive to the molding of the third lens L3.

In some embodiments, the optical system 100 may satisfy the following conditional expression: -2.7<fmax/R32<-1.6. Wherein, R32 is a radius of curvature of the imaging side surface of the third lens L3 at the optical axis. When the optical system 100 satisfies the above conditional expression, it can reduce the complexity of the surface shape of the third lens L3, thereby effectively suppressing the increase of field curvature and distortion, and at the same time reducing the molding difficulty of the third lens L3. In some embodiments, the optical system 100 may further satisfy -2.5<fmax/R32<-1.8, which is beneficial for the molding of the third lens L3.

In some embodiments, the optical system 100 may satisfy the following conditional expression: 0<fmax/|R41|<2. Wherein, R41 is a radius of curvature of the object side surface S7 of the fourth lens L4 at the optical axis. When the optical system 100 satisfies the above conditional expression, it can reduce the complexity of the surface shape of the fourth lens L4, thereby effectively suppressing the increase of field curvature and distortion, and at the same time reducing the molding difficulty of the fourth lens L4.

In some embodiments, the optical system 100 may satisfy the following conditional expression: 1.3<fmax/R42<3.5. Wherein, R42 is a radius of curvature of the imaging side surface S8 of the fourth lens L4 at the optical axis. When the optical system 100 satisfies the above conditional expression, it can reduce the complexity of the surface shape of the fourth lens L4, thereby effectively suppressing the increase of field curvature and distortion, and at the same time reducing the molding difficulty of the fourth lens L4. In some embodiments, the optical system 100 may further satisfy 1.6<fmax/R42<3.2, which is beneficial for the molding of the fourth lens L4.

In some embodiments, the optical system 100 may satisfy the following conditional expression: 1.8<fmax/R51<4. Wherein, R51 is a radius of curvature of the object side surface S9 of the fifth lens L5 at the optical axis. When the optical system 100 satisfies the above conditional expression, it can reduce the complexity of the surface shape of the fifth lens L5, thereby effectively suppressing the increase of field curvature and distortion, and at the same time reducing the molding difficulty of the fifth lens L5. In some embodiments, the optical system 100 may further satisfy 2<fmax/R51<3.7, which is beneficial for the molding of the fifth lens L5.

In some embodiments, the optical system 100 may satisfy the following conditional expression: 0.4<fmax/R52<2.4. Wherein, R52 is a radius of curvature of the imaging side surface S10 of the fifth lens L5 at the optical axis. When the optical system 100 satisfies the above conditional expression, it can reduce the complexity of the surface shape of the fifth lens L5, thereby effectively suppressing the increase of field curvature and distortion, and at the same time reducing the molding difficulty of the fifth lens L5. In some embodiments, the optical system 100 may further satisfy 0.5<fmax/R52<2.1, which may facilitate the molding of the fifth lens L5.

In some embodiments, the optical system 100 may satisfy the following conditional expression: -2.3<fmax/R61<-0.8. Wherein, R61 is a radius of curvature of the object side surface S11 of the sixth lens L6 at the optical axis. When the optical system 100 satisfies the above conditional expression, it can reduce the complexity of the surface shape of the sixth lens L6, thereby effectively suppressing the increase of field curvature and distortion, and at the same time reducing the molding difficulty of the sixth lens L6. Additionally, it may effectively control a back focal length of the optical system 100, prevent the total length of the optical system 100 from being too long, and facilitate the miniaturization design of the optical system 100. In some embodiments, the optical system 100 may further satisfy -1.9<fmax/R61<-1, which may facilitate the molding of the sixth lens L6.

In some embodiments, the optical system 100 may satisfy the following conditional expression: 2<|R62|/fmax<5. Wherein, R62 is a radius of curvature of the imaging side surface S12 of the sixth lens L6 at the optical axis. When the optical system 100 satisfies the above conditional expression, it can reduce the complexity of the surface shape of the sixth lens L6, thereby effectively suppressing the increase of field curvature and distortion, and at the same time reducing the molding difficulty of the sixth lens L6. Additionally, it can effectively control the back focal length of the optical system 100, prevent the total length of the optical system 100 from being too long, and facilitate the miniaturization design of the optical system 100.

In some embodiments, the optical system 100 may satisfy the following conditional expression: $0<R11/|R12| <0.5$. By limiting a ratio of the radii of curvature of the object side surface S1 and the imaging side surface S2 of the first lens L1 near the optical axis, the surface curvature of the first lens L1 may be reasonably controlled, thereby facilitating the processing of the first lens L1, improving the processing yield of the optical system 100, effectively controlling the surface shape of the first lens L1, and reducing the processing difficulty of the first lens L1.

In some embodiments, the optical system 100 may satisfy the following conditional expression: $1.6<R21/R22<5$. By limiting a ratio of the radii of curvature of the object side surface S3 and the imaging side surface S4 of the second lens L2 near the optical axis, the surface curvature of the second lens L2 may be reasonably controlled, thereby facilitating the processing of the second lens L2 and improving the processing yield of the optical system 100. In some embodiments, the optical system 100 may further satisfy $2.1<R21/R22<4.3$, which may effectively control the surface shape of the second lens L2 and reduce the processing difficulty of the second lens L2.

In some embodiments, the optical system 100 may satisfy the following conditional expression: $-0.9<R31/R32<-0.5$. By limiting a ratio of the radii of curvature of the object side surface and the imaging side surface of the third lens L3 near the optical axis, the surface curvature of the third lens L3 may be reasonably controlled, thereby facilitating the processing of the third lens L3 and improving the processing yield of the optical system 100. In some embodiments, the optical system 100 may further satisfy $-0.8<R31/R32<-0.6$, which can effectively control the surface shape of the third lens L3 and reduce the processing difficulty of the third lens L3.

In some embodiments, the optical system 100 may satisfy the following conditional expression: $1.5<|R41/R42|$. By limiting a ratio of the radii of curvature of the object side surface S7 and the imaging side surface S8 of the fourth lens L4 near the optical axis, the surface curvature of the fourth lens L4 may be reasonably controlled, thereby facilitating the processing of the fourth lens L4 and improving the processing yield of the optical system 100.

In some embodiments, the optical system 100 may satisfy the following conditional expression: $0.1<R51/R52<1$. By limiting a ratio of the radii of curvature of the object side surface S9 and the imaging side surface S10 of the fifth lens L5 near optical axis, the surface curvature of the fifth lens L5 may be reasonably controlled, which is convenient for the processing of the fifth lens L5 and is conducive to improving the processing yield of the optical system 100. In some embodiments, the optical system 100 may further satisfy $0.15<R51/R52<0.9$, which may effectively control the surface shape of the fifth lens L5 and reduce the processing difficulty of the fifth lens L5.

In some embodiments, the optical system 100 may satisfy the following conditional expression: $2.5<|R62/R61| <5.5$. When the optical system 100 satisfies the above conditional expression, the surface curvature of the sixth lens L6 may be reasonably controlled, which is convenient for the processing of the sixth lens L6 and is conducive to improving the processing yield of the optical system 100.

In some embodiments, the optical system 100 may satisfy the following conditional expression: $-1<R11/R32<-0.4$. When the optical system 100 satisfies the above conditional expression, the surface shapes of the first lens L1 and the third lens L3 are relatively similar, thereby preventing the problem of excessive deviation between the first lens L1 and the third lens L3 from affecting the assembly of the first lens group. In some embodiments, the optical system 100 may further satisfy $0.9<R11/R32<-0.6$, which further facilitates the assembly of the first lens L1 and the third lens L3.

The optical system 100 of the present disclosure will be described in detail below with reference to specific parameters.

First embodiment

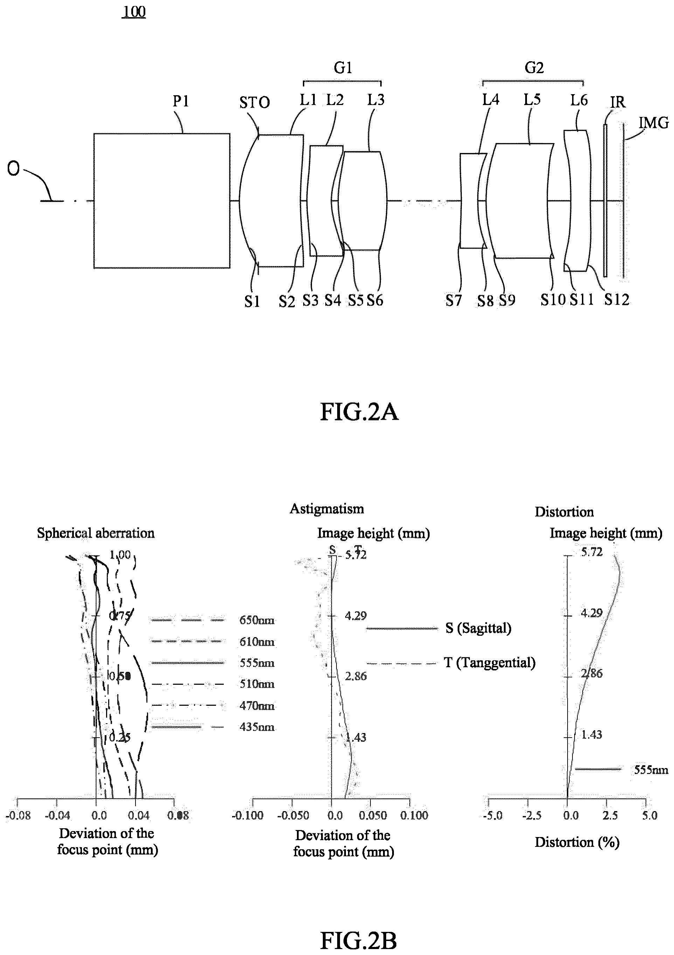

The optical system 100 of the first embodiment is shown in FIG. 1A and 2A, the optical system 100 sequentially includes a prism P1, an aperture STO, a first lens L1, a second lens L2, a third lens L3, a fourth lens L4, a fifth lens L5, a sixth lens L6, and a filter IR. The first lens L1, the second lens L2 and the third lens L3 constitute the first lens group, and the fourth lens L4, the fifth lens L5 and the sixth lens L6 constitute the second lens group.

In the illustrated embodiment, the object side surface S1 and the imaging side surface S2 of the first lens L1 are convex and concave respectively near the optical axis; the object side surface S3 and the imaging side surface S4 of the second lens L2 are convex and concave respectively near the optical axis; the object side surface S5 and the imaging side surface S6 of the third lens L3 are both convex near the optical axis; the object side surface S7 and the imaging side surface S8 of the fourth lens L4 are both concave near the optical axis; the object side surface S9 and the imaging side surface S10 of the fifth lens L5 are convex and concave respectively near the optical axis; the object side surface S11 and the imaging side surface S12 of the sixth lens L6 are both concave near the optical axis.

The parameters of the optical system 100 are given in Table 1. The components from the object side to the image side along the optical axis of the optical system 100 are arranged in the order from top to bottom in Table 1. In the same lens, a surface with a smaller surface number is the object side surface of the lens, and a surface with a larger surface number is the imaging side surface of the lens. For example, surface numbers 1 and 2 correspond to the object side surface S1 and imaging side surface S2 of the first lens L1, respectively. The radius Y in Table 1 is the radius of curvature of the object side surface or the imaging side surface with the corresponding surface number at the optical axis. The first value in the " Thickness " parameter column of the lens is the thickness of the lens at the optical axis, and the second value is a distance from the imaging side surface of the lens to a rear surface in an imaging side direction on the optical axis. The value of the aperture STO in the "Thickness" parameter column is a distance from the aperture STO to a vertex of a latter surface (the vertex refers to an intersection of the surface and the optical axis) on the optical axis, and by default, a direction from the object side surface of the first lens L1 to the imaging side surface of the last lens is a positive direction of the optical axis.

When the value of the aperture STO in the "Thickness" parameter column is negative, it indicates that the aperture STO is arranged on the image side of the vertex of the latter surface. When the value of the aperture STO in the "Thickness" parameter column is a positive value, the aperture STO is arranged on the object side of the vertex of the latter surface. It can be understood that the units of the Y radius, the thickness, and the focal length in Table 1 are all mm. The refractive index and Abbe number in Table 1 are obtained at the reference wavelength of 587.56 nm, and the focal length is obtained at the reference wavelength of 555 nm. Considering that the optical system 100 of the present application can achieve internal focusing and has a far focus state and a near focus state. Therefore, the object distances A are different in the far focus state and the near focus state, meanwhile, the air gaps T34 (i.e., B in Table 1) between the third lens L3 and the fourth lens L4 along the optical axis are also different in the far focus state and the near focus state. As mentioned above, the filter IR can move along a direction of the optical axis with the second lens group. Based on this, the distances from the filter IR to the image plane IMG of the optical system 100 (i.e., C in the following Table 1) are also different in the far focus state and the near focus state.

Based on this, Table 2 is organized, which gives the values of A, B, C, f, TTL, FNO, and FOV in the far focus state and the near focus state. In Table 2, an unit of FOV is deg, and except for FNO which has no unit, the units of other parameters are all mm.

In addition, in the following Table 1 and Table 3, surface numbers 5 and 6 correspond to the object side surface S1 and the imaging side surface S2 of the first lens L1, respectively, surface numbers 3 and 4 correspond to the object side surface S3 and the imaging side surface S4 of the second lens L2, respectively, by parity of reasoning, surface numbers 13 and 14 correspond to the object side surface S11 and the imaging side surface S12 of the sixth lens L6, respectively.

In the first embodiment, the object side surfaces and the imaging side surfaces of the first lens L1 to the sixth lens L6 are both aspheric surfaces. The surface shape x of the aspheric surface can be defined by, but not limited to, the following aspherical formula:

$$x = \frac{ch^2}{1+\sqrt{1-(K+1)c^2h^2}} + \sum Aih^i$$

Wherein, x is a height distance along the optical axis from a position of the aspheric surface at height h to the vertex of the aspheric surface; c is a curvature at the optical axis of the aspheric surface, and c=1/Y (that is, the paraxial curvature c is the reciprocal of the Y radius in the following Table 1); K is the cone coefficient; Ai is the coefficient corresponding to the i-th higher-order term of the aspheric surface. Table 3 shows the higher-order term coefficients A4, A6, A8, A10, A12, A14, A16, A18, and A20 of the surface numbers 5 to 16 in the first embodiment, additionally, for the surface numbers 13, 14, 15, and 16, the higher-order term coefficients A22, A24, A26, A28, and A30 are also provided.

Table 1

| First embodiment | | | | | | | | |
|---|---|---|---|---|---|---|---|---|
| Surface number | Surface name | Surface type | Y radius | Thickness | Material | Refractive index | Abbe number | Focal length |
| OBJ | Object side | sphere | infinity | A | | | | |
| 1 | | sphere | infinity | 0 | | | | |
| 2 | | sphere | infinity | 10 | | 1.847 | 23.827 | |
| 3 | Prism | sphere | infinity | 0.7 | glass | | | |
| 4 | | sphere | infinity | 1.392 | | | | |
| STO | Aperture | sphere | infinity | -1.392 | | | | |

(continued)

| Surface number | Surface name | Surface type | Y radius | Thickness | Material | Refractive index | Abbe number | Focal length |
|---|---|---|---|---|---|---|---|---|
| OBJ | Object side | sphere | infinity | A | | | | |
| 5 | First lens | asphere | 9.174 | 4.500 | plastic | 1.537 | 55.68 | 26.262 |
| 6 | | asphere | 21.788 | 0.476 | | | | |
| 7 | Second lens | asphere | 11.078 | 1.791 | plastic | 1.640 | 23.97 | -15.210 |
| 8 | | asphere | 4.855 | 0.500 | | | | |
| 9 | Third lens | asphere | 8.377 | 3.602 | plastic | 1.537 | 55.68 | 10.139 |
| 10 | | asphere | -13.189 | B | | | | |
| 11 | Fourth lens | asphere | -21.112 | 1.208 | plastic | 1.546 | 55.93 | -15.6685 |
| 12 | | asphere | 14.676 | 0.609 | | | | |
| 13 | Fifth lens | asphere | 10.889 | 4.513 | plastic | 1.592 | 28.39 | 27.303 |
| 14 | | asphere | 28.259 | 1.725 | | | | |
| 15 | Sixth lens | asphere | -22.499 | 1.433 | plastic | 1.537 | 55.68 | -31.514 |
| 16 | | asphere | 69.572 | 1 | | | | |
| 17 | Filter | sphere | infinity | 0.21 | glass | | | |
| 18 | | sphere | infinity | C | | | | |
| IMG | Image plane | sphere | infinity | 0 | | | | |

Table 2

| Variable distance | A | B | C | f | FOV | TTL | FNO |
|---|---|---|---|---|---|---|---|
| Far focus state | infinity | 0.48 | 6.25 | 26.5 | 12.32 | 28.3 | 2.7 |
| Near focus state | 100 | 5.47 | 1.26 | 17.26 | 12 | 28.3 | 1.89 |

Table 3

| First embodiment | | | | | |
|---|---|---|---|---|---|
| Surface number | K | A4 | A6 | A8 | A10 |
| 5 | -5.34759E+00 | 9.07799E-04 | -2.07279E-05 | 6.06139E-07 | -1.35558E-08 |
| 6 | 0.00000E+00 | -1.50747E-03 | 1.21513E-04 | 2.10393E-06 | -2.66880E-06 |
| 7 | 0.00000E+00 | -4.27940E-03 | 2.29184E-04 | 1.94444E-05 | -7.90611E-06 |
| 8 | -5.56263E+00 | -9.51378E-04 | -2.52754E-04 | 1.57276E-04 | -4.24356E-05 |
| 9 | 0.00000E+00 | -2.79710E-03 | -1.52233E-04 | 1.26414E-04 | -3.47872E-05 |
| 10 | -2.44833E+01 | -1.24506E-03 | 1.02536E-05 | 2.20814E-05 | -6.57684E-06 |
| 11 | 0.00000E+00 | 3.29836E-03 | -4.00484E-04 | 2.82263E-05 | 3.00115E-06 |
| 12 | 0.00000E+00 | 5.49949E-03 | -7.79665E-04 | -3.39693E-05 | 3.74982E-05 |
| 13 | 0.00000E+00 | 2.19492E-03 | -4.36105E-04 | -1.94818E-05 | 1.44602E-05 |
| 14 | 0.00000E+00 | 2.56310E-03 | -1.20242E-03 | 6.36818E-04 | -2.78980E-04 |
| 15 | 0.00000E+00 | 2.45327E-03 | -2.83962E-04 | -2.20722E-04 | 1.14301E-04 |
| 16 | 0.00000E+00 | 1.77699E-03 | -8.79209E-04 | 2.76659E-04 | -7.86371E-05 |

(continued)

| Surface number | A12 | A14 | A16 | A18 | A20 |
|---|---|---|---|---|---|
| 5 | 1.12480E-10 | 0.00000E+00 | 0.00000E+00 | 0.00000E+00 | 0.00000E+00 |
| 6 | 3.54222E-07 | -2.15188E-08 | 6.27613E-10 | -7.01043E-12 | 0.00000E+00 |
| 7 | 1.00872E-06 | -6.54252E-08 | 2.20582E-09 | -3.40776E-11 | 1.53369E-13 |
| 8 | 6.73456E-06 | -6.73995E-07 | 4.29306E-08 | -1.60649E-09 | 2.67364E-11 |
| 9 | 5.63559E-06 | -5.89567E-07 | 3.99197E-08 | -1.58802E-09 | 2.77471E-11 |
| 10 | 1.10250E-06 | -1.15698E-07 | 7.48144E-09 | -2.72907E-10 | 4.29577E-12 |
| 11 | -1.00738E-06 | 1.22205E-07 | -8.32016E-09 | 3.10149E-10 | -4.86780E-12 |
| 12 | -7.63219E-06 | 8.65815E-07 | -5.93562E-08 | 2.28109E-09 | -3.75045E-11 |
| 13 | -1.33220E-06 | -3.92506E-08 | -2.91122E-08 | 1.90697E-08 | -4.08690E-09 |
| 14 | 8.34582E-05 | -1.72858E-05 | 2.55346E-06 | -2.73605E-07 | 2.13541E-08 |
| 15 | -3.33368E-05 | 6.61577E-06 | -9.22231E-07 | 9.14653E-08 | -6.46476E-09 |
| 16 | 1.61530E-05 | -2.32420E-06 | 2.38382E-07 | -1.76828E-08 | 9.52450E-10 |
| Surface number | A22 | A24 | A26 | A28 | A30 |
| 13 | 4.84224E-10 | -3.51676E-11 | 1.56586E-12 | -3.94099E-14 | 4.30527E-16 |
| 14 | -1.20294E-09 | 4.76578E-11 | -1.25953E-12 | 1.99260E-14 | -1.42639E-16 |
| 15 | 3.22412E-10 | -1.10622E-11 | 2.48112E-13 | -3.27145E-15 | 1.92111E-17 |
| 16 | -3.69244E-11 | 1.00402E-12 | -1.81626E-14 | 1.96123E-16 | -9.55530E-19 |

Referring to (A) of FIG. 1B and (A) of FIG. 2B, (A) of FIG. 1B and (A) of FIG. 2B are shown the longitudinal spherical aberration diagrams of the optical system 100 in the first embodiment at wavelengths of 435nm, 470nm, 510nm, 555nm, 610nm, and 650nm. In (A) of FIG. 1B and (A) of FIG. 2B, the abscissa along the X-axis represents the deviation of the focus point in mm, and the ordinate along the Y-axis direction represents the normalized field of view. It can be seen from (A) of FIG. 1B and (A) of FIG. 2B that the spherical aberration values of the optical system 100 in the first embodiment are excellent, indicating that the imaging quality of the optical system 100 in this embodiment is well.

Referring to (B) of FIG. 1B and (B) of FIG. 2B, (B) of FIG. 1B and (B) of FIG. 2B are shown the astigmatism curve diagrams of the optical system 100 in the first embodiment at a wavelength of 555nm. The abscissa along the X-axis represents the deviation of the focus point in mm, and the ordinate along the Y-axis represents the image height in mm. In the astigmatism curve diagram, T represents the curvature of the image plane IMG in the tangential direction, and S represents the curvature of the image plane IMG in the sagittal direction. It can be seen from (B) of FIG. 1B and (B) of FIG. 2B that the astigmatism of the optical system 100 has been well compensated at this wavelength.

Please refer to (C) of FIG. 1B and (C) of FIG. 2B, (C) of FIG. 1B and (C) of FIG. 2B are the distortion diagrams of the optical system 100 in the first embodiment at a wavelength of 555nm. The abscissa along the X-axis represents the distortion, and the ordinate along the Y-axis represents the image height in mm. It can be seen from (C) of FIG. 1B and (C) of FIG. 2B that the distortion of the optical system 100 has been well corrected at this wavelength.

Second embodiment

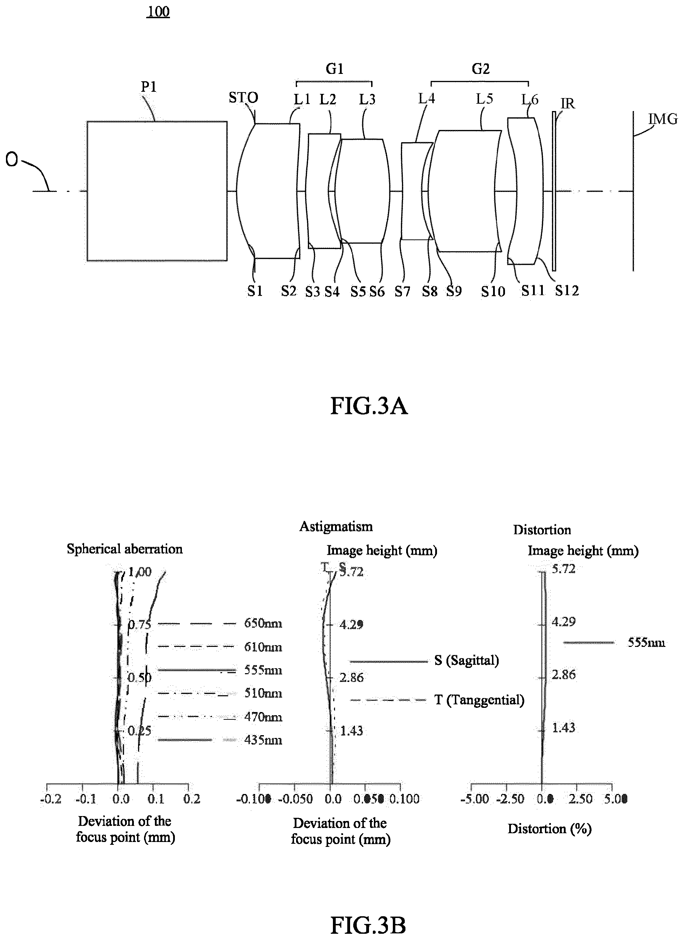

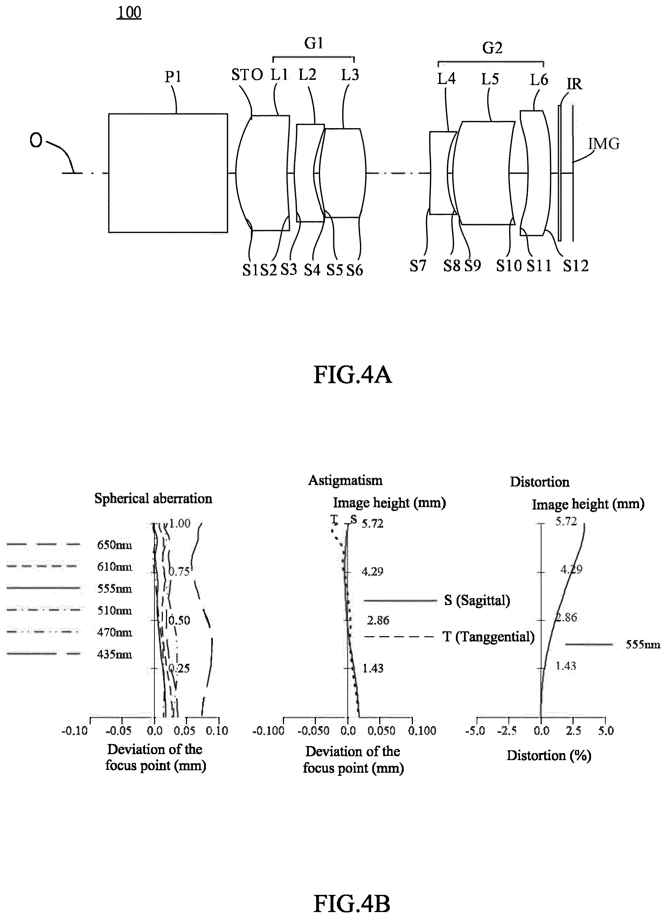

Referring to FIG. 3A and FIG. 4A, in the illustrated embodiment, except for the imaging side surface of the sixth lens L6 being convex near the optical axis, the surface shapes of the other lenses are the same as those in the first embodiment, and will not be described in detail here.

The parameters of the optical system 100 are given in the Table 4 below. The definitions of each parameter can be obtained from the description of the previous embodiment and will not be described in detail here. Correspondingly, Table 5 shows the values of each parameter of the optical system in the far focus state and the near focus state. Table 6 below shows the high-order coefficients that can be used for the aspheric lenses in the second embodiment.

Table 4

| Surface number | Surface name | Surface type | Y radius | Thickness | Material | Refractive index | Abbe number | Focal length |
|---|---|---|---|---|---|---|---|---|
| | | | | Second embodiment | | | | |
| OBJ | Object side | sphere | infinity | A | | | | |
| 1 | | sphere | infinity | 0 | | | | |
| 2 | | sphere | infinity | 10 | | 1.847 | 23.827 | |
| 3 | Prism | sphere | infinity | 0.7 | glass | | | |
| 4 | | sphere | infinity | 1.322 | | | | |
| STO | Aperture | sphere | infinity | -1.322 | | | | |
| 5 | First lens | asphere | 9.228 | 4.327 | plastic | 1.537 | 55.68 | 26.080 |
| 6 | | asphere | 22.658 | 0.610 | | | | |
| 7 | Second lens | asphere | 11.244 | 1.642 | plastic | 1.640 | 23.97 | -14.839 |
| 8 | | asphere | 4.856 | 0.492 | | | | |
| 9 | Third lens | asphere | 8.339 | 3.917 | plastic | 1.537 | 55.68 | 9.884 |
| 10 | | asphere | -12.178 | B | | | | |
| 11 | Fourth lens | asphere | -19.552 | 1.379 | plastic | 1.546 | 55.93 | -13.853 |
| 12 | | asphere | 12.646 | 0.456 | | | | |
| 13 | Fifth lens | asphere | 9.710 | 4.758 | plastic | 1.592 | 28.39 | 32.158 |
| 14 | | asphere | 16.217 | 1.604 | | | | |
| 15 | Sixth lens | asphere | -22.688 | 1.903 | plastic | 1.537 | 55.68 | -56.412 |
| 16 | | asphere | -93.246 | 0.665 | | | | |
| 17 | Filter | sphere | infinity | 0.21 | glass | | | |
| 18 | | sphere | infinity | C | | | | |
| IMG | Image plane | sphere | infinity | 0 | | | | |

Table 5

| Variable distance | A | B | C | f | FOV | TTL | FNO |
|---|---|---|---|---|---|---|---|
| Far focus state | infinity | 0.92 | 5.58 | 26.175 | 12.38 | 28.5 | 2.7 |
| Near focus state | 100 | 5.47 | 1.03 | 17.285 | 12.3 | 28.5 | 1.91 |

Table 6

| Surface number | K | A4 | A6 | A8 | A10 |
|---|---|---|---|---|---|
| | | Second embodiment | | | |
| 5 | -5.45232E+00 | 8.79444E-04 | -1.76360E-05 | 3.42444E-07 | -3.51845E-09 |
| 6 | 2.36421E-01 | -1.58501E-03 | 2.72992E-04 | -5.10912E-05 | 6.54091E-06 |
| 7 | -1.77393E-01 | -4.72529E-03 | 5.40589E-04 | -8.54717E-05 | 1.06416E-05 |
| 8 | -5.49786E+00 | -1.61711E-03 | 3.77927E-04 | -1.05249E-04 | 1.76124E-05 |
| 9 | 6.89266E-02 | -3.12333E-03 | 2.92324E-04 | -5.80601E-05 | 6.89609E-06 |
| 10 | -2.08885E+01 | -1.47732E-03 | 8.23786E-05 | -5.67291E-06 | 3.01607E-07 |
| 11 | -5.01211E+00 | 3.93265E-03 | -8.24590E-04 | 2.05593E-04 | -3.89440E-05 |
| 12 | 2.47494E+00 | 7.30762E-03 | -2.29615E-03 | 5.56230E-04 | -9.50350E-05 |

(continued)

| Second embodiment | | | | | |
|---|---|---|---|---|---|
| Surface number | K | A4 | A6 | A8 | A10 |
| 13 | -4.38590E-01 | 2.97930E-03 | -1.47160E-03 | 4.11612E-04 | -1.04109E-04 |
| 14 | -2.10330E+01 | 1.54516E-03 | -3.98685E-04 | 2.80386E-05 | 1.23448E-05 |
| 15 | 1.17265E+01 | 1.17217E-03 | -4.01827E-04 | 2.78983E-06 | 1.56051E-05 |
| 16 | 9.90000E+01 | 2.43552E-04 | -2.75185E-04 | 5.43734E-05 | -1.23529E-05 |
| Surface number | A12 | A14 | A16 | A18 | A20 |
| 5 | -3.65596E-11 | 0.00000E+00 | 0.00000E+00 | 0.00000E+00 | 0.00000E+00 |
| 6 | -5.43805E-07 | 2.87550E-08 | -9.27085E-10 | 1.64864E-11 | -1.23053E-13 |
| 7 | -8.20482E-07 | 3.49531E-08 | -5.99726E-10 | -5.89433E-12 | 2.55788E-13 |
| 8 | -1.75924E-06 | 1.24020E-07 | -7.09997E-09 | 2.91931E-10 | -5.61503E-12 |
| 9 | -4.80837E-07 | 4.13851E-08 | -4.58775E-09 | 2.80818E-10 | -6.36019E-12 |
| 10 | -4.21385E-08 | 9.51229E-09 | -1.08392E-09 | 5.71357E-11 | -1.14529E-12 |
| 11 | 5.18398E-06 | -4.66565E-07 | 2.68974E-08 | -8.94034E-10 | 1.30091E-11 |
| 12 | 1.15600E-05 | -9.68032E-07 | 5.28440E-08 | -1.69167E-09 | 2.41171E-11 |
| 13 | 2.53321E-05 | -5.38909E-06 | 9.17622E-07 | -1.19299E-07 | 1.15488E-08 |
| 14 | -6.22987E-06 | 1.54229E-06 | -2.43374E-07 | 2.59668E-08 | -1.90674E-09 |
| 15 | -4.33930E-06 | 5.76608E-07 | -2.48558E-08 | -3.97076E-09 | 7.81064E-10 |
| 16 | 2.57611E-06 | -4.12925E-07 | 4.84977E-08 | -4.11422E-09 | 2.49677E-10 |
| Surface number | A22 | A24 | A26 | A28 | A30 |
| 13 | -8.13893E-10 | 4.04061E-11 | -1.33482E-12 | 2.62492E-14 | -2.31618E-16 |
| 14 | 9.59954E-11 | -3.23081E-12 | 6.86408E-14 | -8.15385E-16 | 3.96733E-18 |
| 15 | -6.57935E-11 | 3.24278E-12 | -9.64663E-14 | 1.61064E-15 | -1.16311E-17 |
| 16 | -1.06817E-11 | 3.13567E-13 | -5.99921E-15 | 6.72910E-17 | -3.35436E-19 |

Referring to FIG. 3B and FIG. 4B, from (A) longitudinal spherical aberration diagrams, (B) astigmatism curve diagrams, and (C) distortion diagrams in Figures 3B and 4B, it can be seen that the longitudinal spherical aberration, astigmatism, and distortion of the optical system 100 are all well controlled, thus the optical system 100 of this embodiment has a good imaging quality. In addition, regarding the wavelengths corresponding to the curves in (A), (B), and (C) of FIG. 3B and FIG. 4B, please refer to the contents described in (A), (B), and (C) of Figures 1B and 2B in the first embodiment, and will not be described again here.

Third embodiment

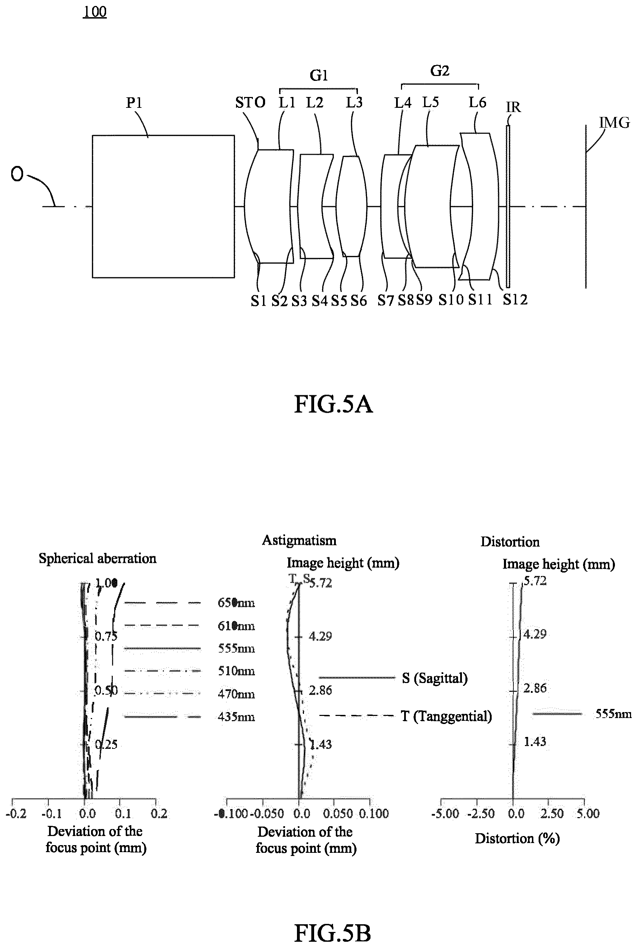

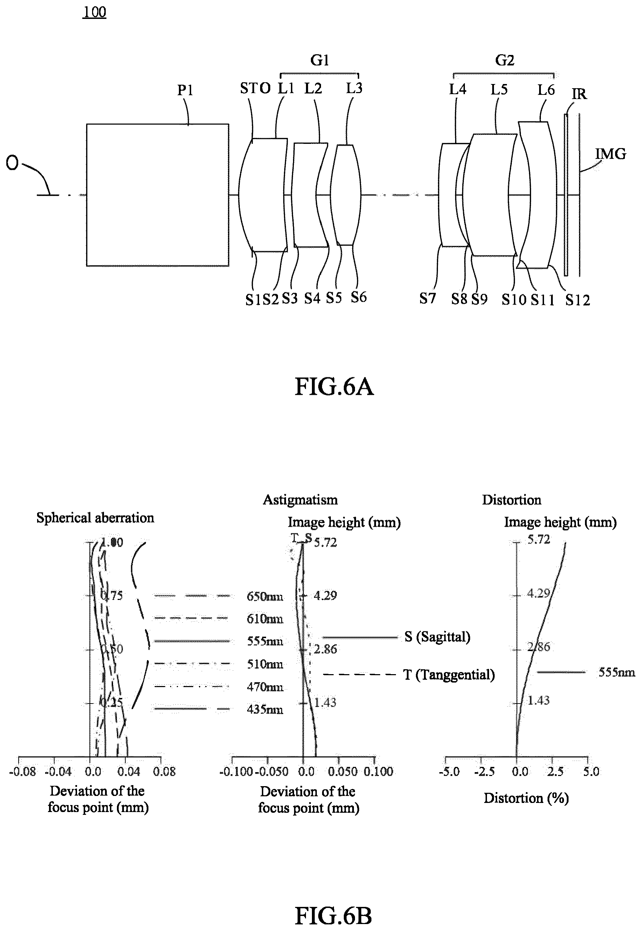

Referring to FIG. 5A and FIG. 6A, in the illustrated embodiment, among the surface shapes of the object side surfaces and imaging side surfaces of the first lens L1 to the sixth lens L6 near the optical axis, only the object side surface of the third lens L3 is convex near the optical axis, and the imaging side surface of the sixth lens L6 is convex near the optical axis, the surface shapes of the object side surfaces and imaging side surfaces of the other lenses near the optical axis are the same as those in the first embodiment.
The parameters of the optical system 100 are given in the Table 7 below. The definitions of each parameter can be obtained from the description of the previous embodiment and will not be described in detail here. Correspondingly, Table 8 shows the values of each parameter of the optical system in the far focus state and the near focus state. Table 9 below shows the high-order coefficients that can be used for the aspheric lenses in the third embodiment.

Table 7

| Surface number | Surface name | Surface type | Y radius | Thickness | Material | Refractive index | Abbe number | Focal length |
|---|---|---|---|---|---|---|---|---|
| OBJ | Object side | sphere | infinity | A | | | | |
| 1 | | sphere | infinity | 0 | | | | |
| 2 | | sphere | infinity | 10 | | 1.847 | 23.827 | |
| 3 | Prism | sphere | infinity | 0.7 | glass | | | |
| 4 | | sphere | infinity | 0.949 | | | | |
| STO | Aperture | sphere | infinity | -0.949 | | | | |
| 5 | First lens | asphere | 8.436 | 3.184 | plastic | 1.537 | 55.68 | 25.730 |
| 6 | | asphere | 18.829 | 0.547 | | | | |
| 7 | Second lens | asphere | 11.305 | 1.715 | plastic | 1.640 | 23.97 | -14.449 |
| 8 | | asphere | 4.786 | 0.986 | | | | |
| 9 | Third lens | asphere | 8.281 | 2.161 | plastic | 1.537 | 55.68 | 9.185 |
| 10 | | asphere | -11.065 | B | | | | |
| 11 | Fourth lens | asphere | 209.159 | 1.200 | plastic | 1.546 | 55.93 | -20.355 |
| 12 | | asphere | 10.533 | 0.486 | | | | |
| 13 | Fifth lens | asphere | 9.631 | 3.225 | plastic | 1.592 | 28.39 | 66.083 |
| 14 | | asphere | 11.187 | 1.555 | | | | |
| 15 | Sixth lens | asphere | -18.619 | 1.842 | plastic | 1.537 | 55.68 | -43.988 |
| 16 | | asphere | -91.246 | 0.556 | | | | |
| 17 | Filter | sphere | infinity | 0.21 | glass | | | |
| 18 | | sphere | infinity | C | | | | |
| IMG | Image plane | sphere | infinity | 0 | | | | |

Table 8

| Variable distance | A | B | C | f | FOV | TTL | FNO |
|---|---|---|---|---|---|---|---|
| Far focus state | infinity | 0.97 | 5.36 | 21.6 | 15.4 | 24 | 2.7 |
| Near focus state | 100 | 5.47 | 0.86 | 15 | 14.8 | 24 | 2.07 |

Table 9

| Surface number | K | A4 | A6 | A8 | A10 |
|---|---|---|---|---|---|
| 5 | -5.68512E+00 | 1.17935E-03 | -3.31130E-05 | 7.19217E-07 | -2.85216E-08 |
| 6 | 1.79848E-01 | -1.55694E-03 | 3.09681E-04 | -5.46192E-05 | 6.37657E-06 |
| 7 | -1.48913E-01 | -5.16487E-03 | 5.32491E-04 | -7.03394E-05 | 8.64783E-06 |
| 8 | -5.54896E+00 | -1.41950E-03 | 1.16359E-04 | -4.17430E-05 | 1.23476E-05 |
| 9 | 3.71523E-01 | -2.20757E-03 | 6.13406E-05 | -1.96577E-05 | 3.56036E-06 |
| 10 | -1.87725E+01 | -1.53682E-03 | 8.88767E-05 | -1.04773E-05 | 1.43916E-06 |
| 11 | -9.90000E+01 | 3.57178E-03 | -7.87584E-04 | 1.66803E-04 | -2.31973E-05 |
| 12 | 1.95711E+00 | 7.29982E-03 | -2.19014E-03 | 4.03173E-04 | -3.93351E-05 |

(continued)

| Third embodiment | | | | | |
|---|---|---|---|---|---|
| Surface number | K | A4 | A6 | A8 | A10 |
| 13 | -8.57239E-01 | 3.13917E-03 | -1.21128E-03 | 8.37439E-05 | 7.78142E-05 |
| 14 | -2.20116E+01 | 2.05887E-03 | -6.53380E-04 | 1.15565E-04 | -2.38333E-05 |
| 15 | 8.84374E+00 | -6.13855E-04 | -3.09476E-04 | 1.67923E-05 | 6.51368E-06 |
| 16 | -6.07469E+01 | -7.06547E-04 | -2.40796E-04 | 7.65698E-05 | -2.08408E-05 |
| Surface number | A12 | A14 | A16 | A18 | A20 |
| 5 | 1.67713E-10 | 0.00000E+00 | 0.00000E+00 | 0.00000E+00 | 0.00000E+00 |
| 6 | -3.97314E-07 | -8.91379E-10 | 1.73328E-09 | -9.42927E-11 | 1.63325E-12 |
| 7 | -6.24497E-07 | 8.14438E-09 | 1.99010E-09 | -1.25312E-10 | 2.29418E-12 |
| 8 | -1.99068E-06 | 2.01296E-07 | -1.33074E-08 | 5.42604E-10 | -1.02047E-11 |
| 9 | -3.97002E-07 | 4.09662E-08 | -3.87388E-09 | 2.25616E-10 | -5.26261E-12 |
| 10 | -2.67299E-07 | 4.25192E-08 | -4.09082E-09 | 2.04792E-10 | -4.08097E-12 |
| 11 | 1.97360E-06 | -8.28428E-08 | -3.54486E-10 | 1.72833E-10 | -4.76325E-12 |
| 12 | 8.97297E-07 | 2.58792E-07 | -3.24687E-08 | 1.62546E-09 | -3.13943E-11 |
| 13 | -4.40573E-05 | 1.39180E-05 | -3.00393E-06 | 4.59948E-07 | -5.03269E-08 |
| 14 | 5.63107E-06 | -1.18612E-06 | 2.10961E-07 | -3.05010E-08 | 3.35281E-09 |
| 15 | -1.82356E-06 | 2.36232E-08 | 9.45013E-08 | -2.49586E-08 | 3.34425E-09 |
| 16 | 4.35519E-06 | -6.61165E-07 | 7.34311E-08 | -5.99827E-09 | 3.58146E-10 |
| Surface number | A22 | A24 | A26 | A28 | A30 |
| 13 | 3.90617E-09 | -2.10002E-10 | 7.43637E-12 | -1.56014E-13 | 1.46888E-15 |
| 14 | -2.63743E-10 | 1.41354E-11 | -4.86741E-13 | 9.67832E-15 | -8.43437E-17 |
| 15 | -2.73228E-10 | 1.41468E-11 | -4.54547E-13 | 8.28845E-15 | -6.56517E-17 |
| 16 | -1.53584E-11 | 4.58417E-13 | -9.01338E-15 | 1.04773E-16 | -5.45225E-19 |

Referring to FIG. 5B and FIG. 6B, from (A) longitudinal spherical aberration diagrams, (B) astigmatism curve diagrams, and (C) distortion diagrams in Figures 5B and 6B, it can be seen that the longitudinal spherical aberration, astigmatism, and distortion of the optical system 100 are all well controlled, thus the optical system 100 of this embodiment has a good imaging quality. In addition, regarding the wavelengths corresponding to the curves in (A), (B), and (C) of FIG. 5B and FIG. 6B, please refer to the contents described in (A), (B), and (C) of Figures 1B and 2B in the first embodiment, and will not be described again here.

Fourth embodiment

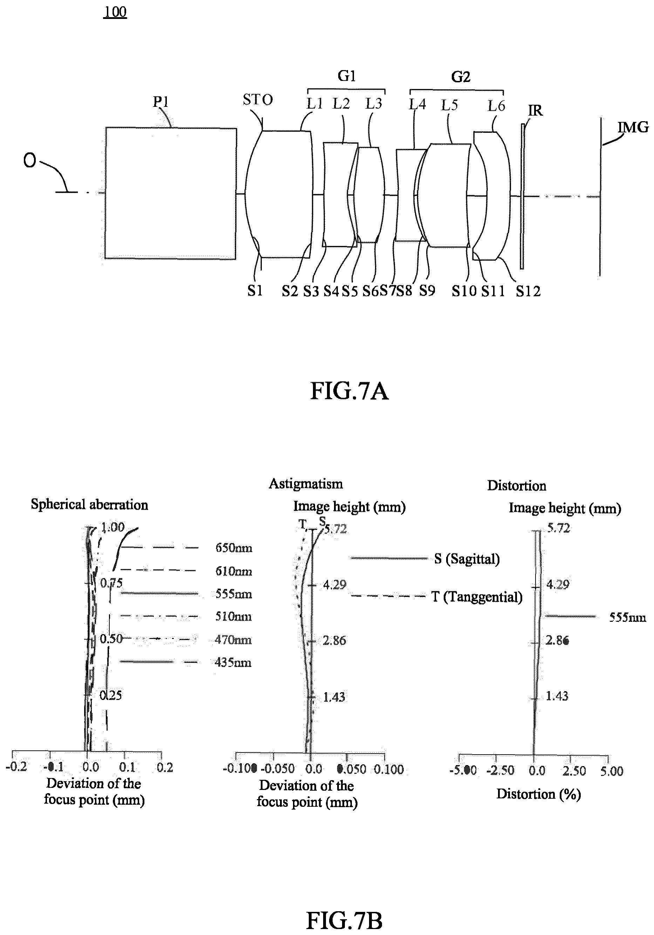

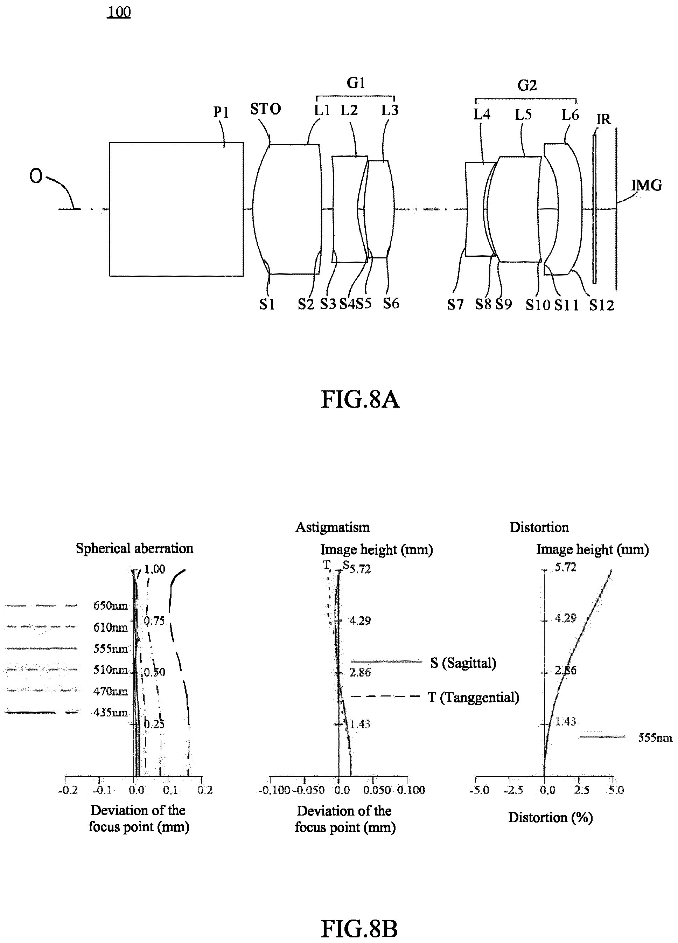

Referring to FIG. 7A and FIG. 8A, in the illustrated embodiment, among the surface shapes of the first lens L1 to the sixth lens L6, only the imaging side surface of the sixth lens L6 is convex near the optical axis, the surface shapes of the object side surfaces and imaging side surfaces of the other lenses near the optical axis are the same as those in the first embodiment.
The parameters of the optical system 100 are given in the Table 10 below. The definitions of each parameter can be obtained from the description of the previous embodiment and will not be described in detail here. Correspondingly, Table 11 shows the values of each parameter of the optical system in the far focus state and the near focus state. Table 12 below shows the high-order coefficients that can be used for the aspheric lenses in the fourth embodiment.

Table 10

| | | | | | Fourth embodiment | | | |
|---|---|---|---|---|---|---|---|---|
| Surface number | Surface name | Surface type | Y radius | Thickness | Material | Refractive index | Abbe number | Focal length |
| OBJ | Object side | sphere | infinity | A | | | | |
| 1 | | sphere | infinity | 0 | | | | |
| 2 | Prism | sphere | infinity | 10 | glass | 1.847 | 23.827 | |
| 3 | | sphere | infinity | 0.7 | | | | |
| 4 | | sphere | infinity | 1.257 | | | | |
| STO | Aperture | sphere | infinity | -1.257 | | | | |
| 5 | First lens | asphere | 9.502 | 5.155 | plastic | 1.537 | 55.68 | 17.273 |
| 6 | | asphere | -305.010 | 0.857 | | | | |
| 7 | Second lens | asphere | 21.091 | 1.820 | plastic | 1.640 | 23.97 | -11.295 |
| 8 | | asphere | 5.204 | 0.490 | | | | |
| 9 | Third lens | asphere | 9.297 | 2.262 | plastic | 1.537 | 55.68 | 10.118 |
| 10 | | asphere | -11.941 | B | | | | |
| 11 | Fourth lens | asphere | -14.838 | 1.200 | plastic | 1.546 | 55.93 | -10.235 |
| 12 | | asphere | 9.223 | 0.278 | | | | |
| 13 | Fifth lens | asphere | 7.558 | 3.780 | plastic | 1.592 | 28.39 | 16.071 |
| 14 | | asphere | 29.984 | 1.546 | | | | |
| 15 | Sixth lens | asphere | -15.471 | 1.765 | plastic | 1.537 | 55.68 | -36.850 |
| 16 | | asphere | -73.946 | 0.824 | | | | |
| 17 | Filter | sphere | infinity | 0.21 | glass | | | |
| 18 | | sphere | infinity | C | | | | |
| IMG | Image plane | sphere | infinity | 0 | | | | |

Table 11

| Variable distance | A | B | C | f | FOV | TTL | FNO |
|---|---|---|---|---|---|---|---|
| Far focus state | infinity | 1.12 | 5.90 | 26.2 | 12.3 | 27.2 | 2.7 |
| Near focus state | 100 | 5.47 | 1.55 | 17.4 | 12 | 27.2 | 1.89 |

Table 12

| | | | Fourth embodiment | | |
|---|---|---|---|---|---|
| Surface number | K | A4 | A6 | A8 | A10 |
| 5 | -5.98503E+00 | 8.32437E-04 | -1.91758E-05 | 3.73432E-07 | -3.96689E-09 |
| 6 | -9.90000E+01 | -1.18630E-03 | 1.75762E-04 | -2.93102E-05 | 3.18577E-06 |
| 7 | 2.82012E+00 | -4.48922E-03 | 4.99803E-04 | -7.03978E-05 | 6.90705E-06 |
| 8 | -6.19827E+00 | -2.47123E-03 | 6.28066E-04 | -1.74034E-04 | 2.97230E-05 |
| 9 | -1.91071E-01 | -3.64320E-03 | 4.90252E-04 | -1.12176E-04 | 1.47053E-05 |
| 10 | -1.94581E+01 | -1.55972E-03 | 9.49693E-05 | -3.53668E-06 | -2.44418E-06 |
| 11 | -4.34608E+00 | 4.58507E-03 | -1.14300E-03 | 2.97242E-04 | -5.42276E-05 |
| 12 | 8.55507E-01 | 1.02162E-02 | -4.26863E-03 | 1.12379E-03 | -1.91340E-04 |

(continued)

| Fourth embodiment | | | | |
|---|---|---|---|---|
| Surface number | K | A4 | A6 | A8 | A10 |
| 13 | -2.78742E-01 | 5.34338E-03 | -2.90354E-03 | 8.09307E-04 | -1.71356E-04 |
| 14 | -3.43576E+01 | 1.55669E-03 | -4.31773E-04 | 4.08975E-05 | 9.00163E-06 |
| 15 | 1.20584E+01 | 1.92223E-04 | -3.28029E-04 | -2.96296E-05 | 3.01059E-05 |
| 16 | 5.11062E+01 | -8.12230E-04 | -2.29842E-04 | 5.41408E-05 | -1.46047E-05 |
| Surface number | A12 | A14 | A16 | A18 | A20 |
| 5 | -6.16015E-11 | 0.00000E+00 | 0.00000E+00 | 0.00000E+00 | 0.00000E+00 |
| 6 | -1.96642E-07 | 5.06052E-09 | 8.78193E-11 | -8.15884E-12 | 1.35585E-13 |
| 7 | -1.94746E-07 | -3.16406E-08 | 3.60006E-09 | -1.48209E-10 | 2.24748E-12 |
| 8 | -3.32291E-06 | 3.08428E-07 | -2.46412E-08 | 1.26415E-09 | -2.74123E-11 |
| 9 | -1.41878E-06 | 1.96195E-07 | -2.39459E-08 | 1.48435E-09 | -3.44994E-11 |
| 10 | 6.47461E-07 | -7.04480E-08 | 3.57713E-09 | -6.66312E-11 | -1.89003E-13 |
| 11 | 6.52222E-06 | -5.01104E-07 | 2.31732E-08 | -5.67593E-10 | 5.25883E-12 |
| 12 | 2.14857E-05 | -1.55698E-06 | 6.91260E-08 | -1.68626E-09 | 1.70428E-11 |
| 13 | 3.22445E-05 | -5.60505E-06 | 8.54314E-07 | -1.07347E-07 | 1.07316E-08 |
| 14 | -6.42863E-06 | 2.00795E-06 | -3.98855E-07 | 5.38290E-08 | -5.04893E-09 |
| 15 | -9.28827E-06 | 1.73556E-06 | -2.01736E-07 | 1.30553E-08 | -1.82217E-10 |
| 16 | 3.44451E-06 | -6.02813E-07 | 7.63753E-08 | -7.01091E-09 | 4.64600E-10 |
| Surface number | A22 | A24 | A26 | A28 | A30 |
| 13 | -8.29340E-10 | 4.74365E-11 | -1.87040E-12 | 4.49106E-14 | -4.90985E-16 |
| 14 | 3.30008E-10 | -1.47650E-11 | 4.31208E-13 | -7.40025E-15 | 5.65209E-17 |
| 15 | -4.24350E-11 | 3.82440E-12 | -1.55530E-13 | 3.24620E-15 | -2.81358E-17 |
| 16 | -2.19285E-11 | 7.17031E-13 | -1.54130E-14 | 1.95756E-16 | -1.11290E-18 |

Referring to FIG. 7B and FIG. 8B, from (A) longitudinal spherical aberration diagrams, (B) astigmatism curve diagrams, and (C) distortion diagrams in Figures 7B and 8B, it can be seen that the longitudinal spherical aberration, astigmatism, and distortion of the optical system 100 are all well controlled, thus the optical system 100 of this embodiment has a good imaging quality. In addition, regarding the wavelengths corresponding to the curves in (A), (B), and (C) of FIG. 7B and FIG. 8B, please refer to the contents described in (A), (B), and (C) of Figures 1B and 2B in the first embodiment, and will not be described again here.

Fifth embodiment

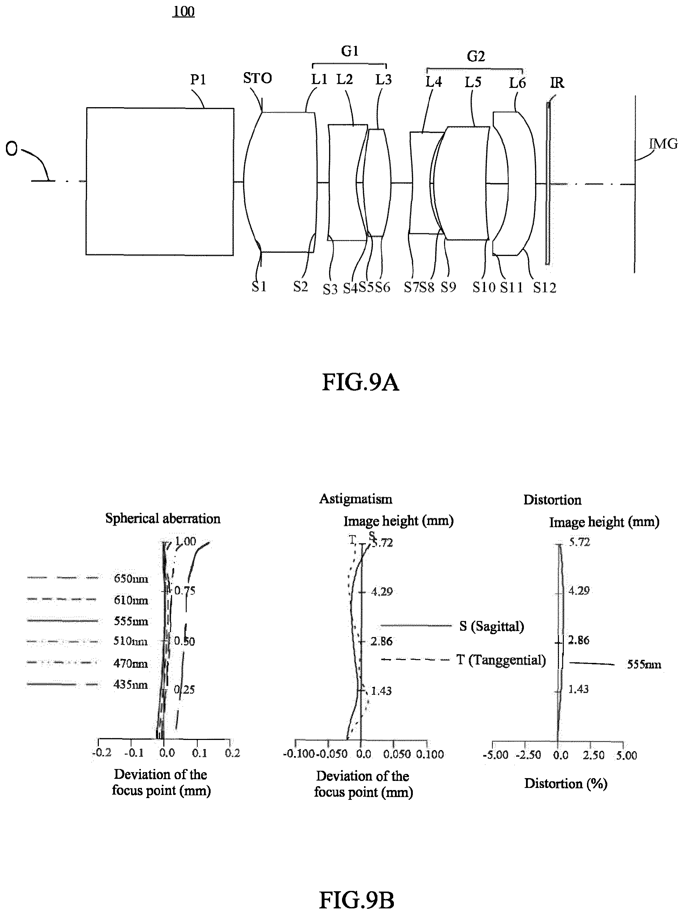

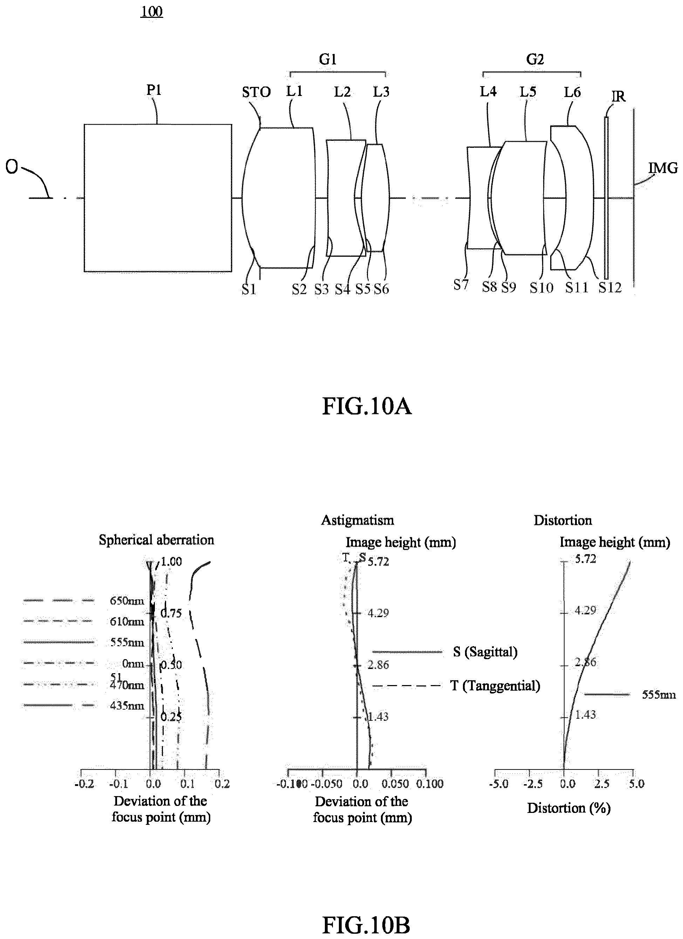

Referring to FIG. 9A and FIG. 10A, in the illustrated embodiment, among the surface shapes of the object side surfaces and imaging side surfaces of the first lens L1 to the sixth lens L6 near the optical axis, only the imaging side surface of the sixth lens L6 is convex near the optical axis, the surface shapes of the object side surfaces and imaging side surfaces of the other lenses near the optical axis are the same as those in the first embodiment.
The parameters of the optical system 100 are given in the Table 13 below. The definitions of each parameter can be obtained from the description of the previous embodiment and will not be described in detail here. Correspondingly, Table 14 shows the values of each parameter of the optical system in the far focus state and the near focus state. Table 15 below shows the high-order coefficients that can be used for the aspheric lenses in the fifth embodiment.

Table 13

| Surface number | Surface name | Surface type | Y radius | Thickness | Material | Refractive index | Abbe number | Focal length |
|---|---|---|---|---|---|---|---|---|
| | | | | Fifth embodiment | | | | |
| OBJ | Object side | sphere | infinity | A | | | | |
| 1 | | sphere | infinity | 0 | | | | |
| 2 | | sphere | infinity | 10 | | 1.847 | 23.827 | |
| 3 | Prism | sphere | infinity | 0.7 | glass | | | |
| 4 | | sphere | infinity | 1.225 | | | | |
| STO | Aperture | sphere | infinity | -1.225 | | | | |
| 5 | First lens | asphere | 9.418 | 4.984 | plastic | 1.537 | 55.68 | 17.246 |
| 6 | | asphere | -432.010 | 0.825 | | | | |
| 7 | Second lens | asphere | 21.056 | 1.846 | plastic | 1.640 | 23.97 | -11.138 |
| 8 | | asphere | 5.144 | 0.458 | | | | |
| 9 | Third lens | asphere | 8.986 | 1.900 | plastic | 1.537 | 55.68 | 9.768 |
| 10 | | asphere | -11.646 | B | | | | |
| 11 | Fourth lens | asphere | -13.288 | 1.200 | plastic | 1.546 | 55.93 | -9.489 |
| 12 | | asphere | 8.765 | 0.239 | | | | |
| 13 | Fifth lens | asphere | 7.518 | 3.554 | plastic | 1.592 | 28.39 | 14.878 |
| 14 | | asphere | 42.446 | 1.526 | | | | |
| 15 | Sixth lens | asphere | -15.033 | 1.854 | plastic | 1.537 | 55.68 | -37.768 |
| 16 | | asphere | -60.734 | 0.771 | | | | |
| 17 | Filter | sphere | infinity | 0.21 | glass | | | |
| 18 | | sphere | infinity | C | | | | |
| IMG | Image plane | sphere | infinity | 0 | | | | |

Table 14

| Variable distance | A | B | C | f | FOV | TTL | FNO |
|---|---|---|---|---|---|---|---|
| Far focus state | infinity | 1.47 | 5.79 | 25.7 | 12.52 | 26.7 | 2.7 |
| Near focus state | 100 | 5.47 | 1.79 | 17.5 | 12 | 26.7 | 1.91 |

Table 15

| Surface number | K | A4 | A6 | A8 | A10 |
|---|---|---|---|---|---|
| | | Fifth embodiment | | | |
| 5 | -5.93371E+00 | 8.44404E-04 | -1.95436E-05 | 3.75012E-07 | -3.15744E-09 |
| 6 | -9.90000E+01 | -1.26804E-03 | 1.87430E-04 | -2.98866E-05 | 3.14816E-06 |
| 7 | 2.42349E+00 | -4.53892E-03 | 4.88398E-04 | -6.25154E-05 | 5.02624E-06 |
| 8 | -6.14882E+00 | -2.31421E-03 | 5.64959E-04 | -1.56391E-04 | 2.74902E-05 |
| 9 | -1.76224E-01 | -3.59837E-03 | 4.84443E-04 | -1.21068E-04 | 2.08427E-05 |
| 10 | -1.91194E+01 | -1.60075E-03 | 1.13500E-04 | -1.26206E-05 | 7.41076E-07 |
| 11 | -4.65926E+00 | 4.49617E-03 | -1.02433E-03 | 2.58002E-04 | -4.67669E-05 |
| 12 | 9.16776E-01 | 1.01987E-02 | -4.26985E-03 | 1.14009E-03 | -1.97752E-04 |

(continued)

| Fifth embodiment | | | | |
|---|---|---|---|---|
| Surface number | K | A4 | A6 | A8 | A10 |
| 13 | -1.58549E-01 | 5.36838E-03 | -2.79294E-03 | 6.11484E-04 | -2.14442E-05 |
| 14 | 7.56670E+00 | 1.57248E-03 | -4.57420E-04 | 8.09697E-05 | -1.95443E-05 |
| 15 | 1.19858E+01 | 3.05036E-04 | -2.89048E-04 | -5.23413E-05 | 3.70409E-05 |
| 16 | 9.90000E+01 | -4.91276E-04 | -5.04449E-04 | 2.07321E-04 | -6.92251E-05 |
| Surface number | A12 | A14 | A16 | A18 | A20 |
| 5 | -9.20012E-11 | 0.00000E+00 | 0.00000E+00 | 0.00000E+00 | 0.00000E+00 |
| 6 | -1.82503E-07 | 3.40007E-09 | 1.88683E-10 | -1.13541E-11 | 1.77267E-13 |
| 7 | 7.23863E-08 | -5.55525E-08 | 4.91670E-09 | -1.89029E-10 | 2.79208E-12 |
| 8 | -3.47027E-06 | 3.89486E-07 | -3.46318E-08 | 1.81098E-09 | -3.89345E-11 |
| 9 | -3.27272E-06 | 4.96704E-07 | -5.09374E-08 | 2.75254E-09 | -5.88543E-11 |
| 10 | -6.00918E-08 | 2.65808E-08 | -4.30059E-09 | 2.79261E-10 | -6.49680E-12 |
| 11 | 5.56605E-06 | -4.14368E-07 | 1.76886E-08 | -3.50463E-10 | 1.28565E-12 |
| 12 | 2.25896E-05 | -1.65492E-06 | 7.33619E-08 | -1.74128E-09 | 1.61152E-11 |
| 13 | -3.65089E-05 | 1.57114E-05 | -3.82222E-06 | 6.32457E-07 | -7.39212E-08 |
| 14 | 5.84198E-06 | -1.45862E-06 | 2.76082E-07 | -3.89567E-08 | 4.03168E-09 |
| 15 | -1.03459E-05 | 1.74802E-06 | -1.75437E-07 | 7.65635E-09 | 3.95001E-10 |
| 16 | 1.65353E-05 | -2.79675E-06 | 3.39472E-07 | -2.98484E-08 | 1.90118E-09 |
| Surface number | A22 | A24 | A26 | A28 | A30 |
| 13 | 6.10650E-09 | -3.48951E-10 | 1.31267E-11 | -2.92492E-13 | 2.92493E-15 |
| 14 | -2.98609E-10 | 1.52945E-11 | -5.12625E-13 | 1.00981E-14 | -8.85644E-17 |
| 15 | -8.07249E-11 | 5.44339E-12 | -1.97728E-13 | 3.85733E-15 | -3.18257E-17 |
| 16 | -8.67398E-11 | 2.76011E-12 | -5.81256E-14 | 7.27656E-16 | -4.09843E-18 |

Referring to FIG. 9B and FIG. 10B, from (A) longitudinal spherical aberration diagrams, (B) astigmatism curve diagrams, and (C) distortion diagrams in Figures 9B and 10B, it can be seen that the longitudinal spherical aberration, astigmatism, and distortion of the optical system 100 are all well controlled, thus the optical system 100 of this embodiment has a good imaging quality. In addition, regarding the wavelengths corresponding to the curves in (A), (B), and (C) of FIG. 9B and FIG. 10B, please refer to the contents described in (A), (B), and (C) of Figures 1B and 2B in the first embodiment, and will not be described again here.

Refer to Table 16, Table 16 is a summary of the ratios of each relational expression in the first to fifth embodiments of the present disclosure.

Table 16

| Relational expression/embodiment | First embodiment | Second embodiment | Third embodiment | Fourth embodiment | Fifth embodiment |
|---|---|---|---|---|---|
| f1/fmax | 0.991 | 0.996 | 1.197 | 0.659 | 0.671 |
| f2/fmax | -0.574 | -0.567 | -0.672 | -0.431 | -0.433 |
| f3/fmax | 0.383 | 0.378 | 0.427 | 0.386 | 0.380 |
| f4/fmax | -0.591 | -0.529 | -0.947 | -0.391 | -0.369 |
| f5/fmax | 1.030 | 1.229 | 3.074 | 0.613 | 0.579 |
| f6/fmax | -1.189 | -2.155 | -2.046 | -1.406 | -1.470 |

(continued)

| Relational expression/embodiment | First embodiment | Second embodiment | Third embodiment | Fourth embodiment | Fifth embodiment |
|---|---|---|---|---|---|
| f123/fmax | 0.604 | 0.596 | 0.660 | 0.588 | 0.583 |
| f456/fmax | -0.583 | -0.567 | -0.743 | -0.566 | -0.572 |
| f123/f456 | -1.037 | -1.050 | -0.888 | -1.039 | -1.020 |
| fmax/R11 | 2.889 | 2.837 | 2.549 | 2.757 | 2.729 |
| fmax/R12 | 1.216 | 1.155 | 1.142 | -0.086 | -0.059 |
| fmax/R21 | 2.392 | 2.328 | 1.902 | 1.242 | 1.221 |
| fmax/R22 | 5.458 | 5.390 | 4.492 | 5.035 | 4.996 |
| fmax/R31 | 3.164 | 3.139 | 2.596 | 2.818 | 2.860 |
| fmax/R32 | -2.009 | -2.149 | -1.943 | -2.194 | -2.207 |
| fmax/R41 | -1.255 | -1.339 | 0.103 | -1.766 | -1.934 |
| fmax/R42 | 1.806 | 2.070 | 2.041 | 2.841 | 2.932 |
| fmax/R51 | 2.434 | 2.696 | 2.232 | 3.467 | 3.418 |
| fmax/R52 | 0.938 | 1.614 | 1.922 | 0.874 | 0.605 |
| fmax/R61 | -1.178 | -1.154 | -1.155 | -1.694 | -1.710 |
| R62/fmax | 2.625 | -3.562 | -4.244 | -2.822 | -2.363 |
| DLmax/TTL | 0.755 | 0.932 | 0.932 | 0.905 | 0.894 |
| TTL/fmax | 1.068 | 1.089 | 1.116 | 1.038 | 1.039 |
| TTL/ImgH | 4.948 | 4.983 | 4.196 | 4.755 | 4.668 |
| CTI123/∑CT | 0.437 | 0.551 | 0.530 | 0.578 | 0.569 |
| CT456/∑CT | 0.563 | 0.449 | 0.470 | 0.422 | 0.431 |
| CT5/∑CT | 0.200 | 0.265 | 0.242 | 0.237 | 0.232 |
| CT5/CT6 | 3.149 | 2.500 | 1.751 | 2.142 | 1.917 |
| SD62/ImgH | 0.917 | 0.919 | 0.901 | 0.855 | 0.850 |
| R11/|R12| | 0.421 | 0.407| | 0.448 | 0.031 | 0.022 |
| R21/R22 | 2.282 | 2.315 | 2.362 | 4.053 | 4.093 |
| R31/R32 | -0.635 | -0.685 | -0.748 | -0.779 | -0.772 |
| R41/R42 | 1.439 | 1.546 | 19.857 | 1.609 | 1.516 |
| R51/R52 | 0.385 | 0.599 | 0.861 | 0.252 | 0.177 |
| R62/R61 | 3.092 | 4.110 | 4.901 | 4.780 | 4.040 |
| R11/R32 | -0.696 | -0.758 | -0.762 | -0.796 | -0.809 |
| CT3/CT2 | 2.011 | 2.386 | 1.260 | 1.242 | 1.029 |
| CT1/CT2 | 2.512 | 2.636 | 1.856 | 2.832 | 2.700 |
| SD11/ImgH | 0.858 | 0.848 | 0.697 | 0.847 | 0.832 |
| SD32/SD41 | 1.000 | 1.030 | 0.971 | 1.030 | 1.051 |
| TD123/TD456 | 0.722 | 1.088 | 1.034 | 1.235 | 1.196 |
| TTL/(TD123+TD456) | 1.092 | 1.351 | 1.420 | 1.420 | 1.452 |
| fz1/fz2 | 1.535 | 1.514 | 1.433 | 1.506 | 1.469 |
| FNOz1/FNOz2 | 1.429 | 1.414 | 1.304 | 1.429 | 1.414 |
| Bz2/Bz1 | 11.344 | 5.925 | 5.621 | 4.871 | 3.714 |

(continued)

| Relational expression/embodiment | First embodiment | Second embodiment | Third embodiment | Fourth embodiment | Fifth embodiment |
|---|---|---|---|---|---|
| SD11/CT1 | 1.091 | 1.120 | 1.252 | 0.939 | 0.955 |
| CT5/CT4 | 3.735467241 | 3.450 | 2.689 | 3.15 | 2.962 |
| CT4/CT6 | 0.843 | 0.725 | 0.652 | 0.680 | 0.647 |

Table 17 is a summary of the values of other parameters of the optical system in the first to fifth embodiments of the present disclosure. Wherein, f1, f2, f3, f4, f5, and f6 represent the focal lengths of the first lens L1 to the sixth lens L6 respectively. R11 and R12 are the radii of curvature at the object side surface and the imaging side surface of the first lens L1 on the optical axis, R21 and R22 are the radii of curvature at the object side surface and the imaging side surface of the second lens L2 on the optical axis, R31 and R32 are the radii of curvature at the object side surface and the imaging side surface of the third lens L3 on the optical axis, R41 and R42 are the radii of curvature at the object side surface and the imaging side surface of the fourth lens L4 on the optical axis, R51 and R52 are the radii of curvature at the object side surface and the imaging side surface of the fifth lens L5 on the optical axis, and R61 and R62 are the radii of curvature at the object side surface and the imaging side surface of the sixth lens L6 on the optical axis.

Table 17

| Parameter | First embodiment | Second embodiment | Third embodiment | Fourth embodiment | Fifth embodiment |
|---|---|---|---|---|---|
| fmax | 26.500 | 26.175 | 21.500 | 26.200 | 25.700 |
| f1 | 26.262 | 26.080 | 25.730 | 17.273 | 17.246 |
| f2 | -15.210 | -14.839 | -14.449 | -11.295 | -11.138 |
| f3 | 10.139 | 9.884 | 9.185 | 10.118 | 9.768 |
| f4 | -15.668 | -13.853 | -20.355 | -10.235 | -9.489 |
| f5 | 27.303 | 32.158 | 66.083 | 16.071 | 14.878 |
| f6 | -31.514 | -56.412 | -43.988 | -36.850 | -37.768 |
| f123 | 16.007 | 15.591 | 14.181 | 15.401 | 14.995 |
| f456 | -15.437 | -14.852 | -15.966 | -14.829 | -14.699 |
| R11 | 9.174 | 9.228 | 8.436 | 9.502 | 9.418 |
| R12 | 21.788 | 22.658 | 18.829 | -305.010 | -432.010 |
| R21 | 11.078 | 11.244 | 11.305 | 21.091 | 21.056 |
| R22 | 4.855 | 4.856 | 4.786 | 5.204 | 5.144 |
| R31 | 8.377 | 8.339 | 8.281 | 9.297 | 8.986 |
| R32 | -13.189 | -12.178 | -11.065 | -11.941 | -11.646 |
| R41 | -21.112 | -19.552 | 209.159 | -14.838 | -13.288 |
| R42 | 14.676 | 12.646 | 10.533 | 9.223 | 8.765 |
| R51 | 10.889 | 9.710 | 9.631 | 7.558 | 7.518 |
| R52 | 28.259 | 16.217 | 11.187 | 29.984 | 42.446 |
| R61 | -22.499 | -22.688 | -18.619 | -15.471 | -15.033 |
| R62 | 69.572 | -93.246 | -91.246 | -73.946 | -60.734 |

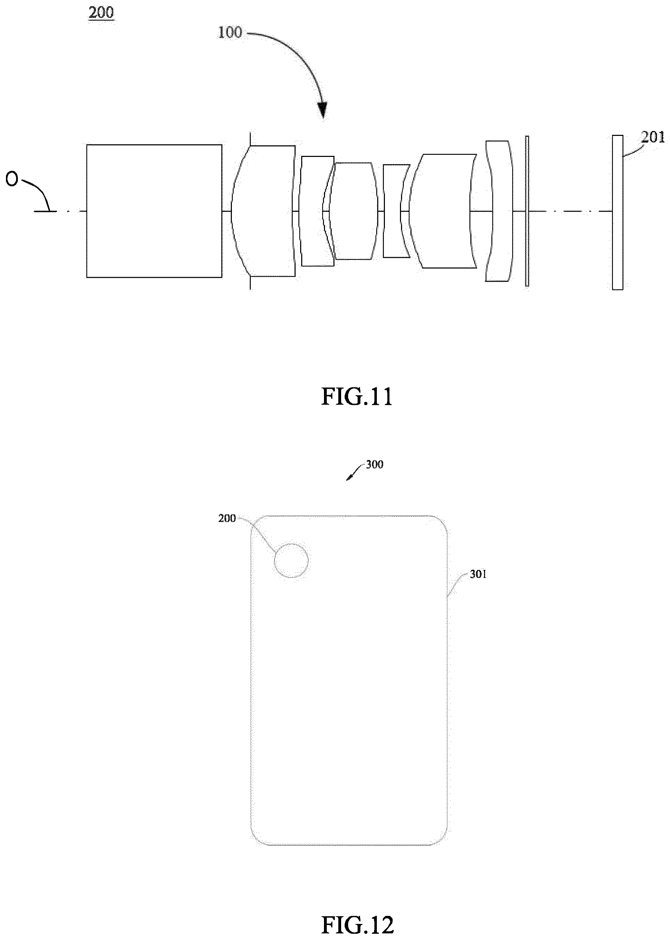

Referring to FIG. 11, the present disclosure also discloses an image module 200. The image module 200 includes an imaging sensor 201 and the optical system 100 as described in any of the above embodiments. The imaging sensor 201 is arranged on the imaging side of the optical system 10. The optical system 100 is used to receive the light signal of the object being photographed and project it onto the imaging sensor 201, which converts the light signal corresponding to the object into an image signal, this will not be elaborated here. It can be understood that the image module 200 with the above optical system 100 has all the technical effects of the optical system 100 and can have a large imaging surface while achieving miniaturization and thinning. Since the technical effects have been described in detail in the embodiments of the optical system 100, they will not be repeated here.

Referring to FIG. 12, the present disclosure also discloses an electronic device 300, which includes a housing 301 and the above image module 200. The image module 200 is arranged in the housing 301. In some embodiments, the image module 200 may be arranged inside the housing 301 or on the housing 301. The electronic device 300 may be, but is not limited to, a mobile phone, a tablet computer, a notebook computer, a smart watch, or a monitor, etc. It can be understood that the electronic device 300 with the above image module 200 also has all the technical effects of the optical system 100. That is, it can have a large imaging surface while achieving miniaturization and thinning, which is beneficial to improving the imaging quality. Since the technical effects have been described in detail in the embodiments of the optical system 100, they will not be repeated here.

The optical systemsystem, image module and electronic device disclosed in the embodiments of the present invention have been introduced in detail above. Specific examples are used in this application to illustrate the principles and implementation methods of the present invention. The description of the above embodiments is only used to help understand the optical system, image module and electronic device of the invention and its core idea; at the same time, for those of ordinary skill in the field, there will be changes in the specific implementation and application scope based on the ideas of the present invention. In summary, the content of this description should not be understood as a limitation of the present invention.

**Claims**

1. An optical system (100), from an object side to an imaging side along an optical axis (O), sequentially comprising:

    a first lens group (G1), wherein the first lens group (G1) comprises a first lens (L1), a second lens (L2), and a third lens (L3) arranged in sequence along the optical axis (O) from the object side to the image side, the first lens (L1) has positive refractive power, an object side surface (S1) of the first lens (L1) is convex near the optical axis (O), the second lens (L2) has negative refractive power, an object side surface (S3) of the second lens (L2) is convex near the optical axis (O), an imaging side surface (S4) of the second lens (L2) is concave near the optical axis (O), the third lens (L3) has positive refractive power, and an object side surface (S5) and an imaging side surface (S6) of the third lens (L3) are convex near the optical axis (O);
    a second lens group (G2), wherein the second lens group (G2) comprises a fourth lens (L4), a fifth lens (L5), and a sixth lens (L6) arranged in sequence along the optical axis (O) from the object side to the image side, the fourth lens (L4) has negative refractive power, an imaging side surface (S8) of the fourth lens (L4) is concave near the optical axis (O), the fifth lens (L5) has positive refractive power, an object side surface (S9) of the fifth lens (L5) is convex near the optical axis (O), an imaging side surface (S10) of the fifth lens (L5) is concave near the optical axis (O), the sixth lens (L6) has negative refractive power, and an object side surface (S11) of the sixth lens (L6) is concave near the optical axis (O); and
    an image plane (IMG);
    wherein, the first lens group (G1) is fixed relative to the image plane (IMG) of the optical system (100), the second lens group (G2) is movably arranged between the first lens group (G1) and the image plane (IMG) of the optical system (100) to move along a direction of the optical axis (O), and
    the optical system (100) satisfies following conditional expressions:

$$5\deg < FOV < 20\deg, \text{ and } 1.5 < FNO < 3.2;$$

    wherein, FOV is the maximum field of view angle of the optical system (100), and FNO is an aperture number of the optical system (100).

2. The optical system (100) of claim 1, wherein the optical system (100) further satisfies at least one of following conditional expressions:

$$0.4 < f1/fmax < 1.5,$$

$$-0.9 < f2/fmax < -0.3,$$

$$0.25 < f3/fmax < 0.6,$$

$$-1.2 < f4/fmax < -0.25,$$

$$0.5 < f5/fmax < 3.2,$$

$$-3 < f6/fmax < -0.9,$$

$$-2 < f4/f < -0.8,$$

$$-1.4 < f123/f456 < -0.6,$$

$$0.4 < f123/fmax < 0.8,$$

and

$$-0.9 < f456/fmax < -0.4,$$

wherein, f1 is a focal length of the first lens (L1), f2 is a focal length of the second lens (L2), f3 is a focal length of the third lens (L3), f4 is a focal length of the fourth lens (L4), f5 is a focal length of the fifth lens (L5), f6 is a focal length of the sixth lens (L6), fmax is the maximum focal length of the optical system (100), f123 is a combined focal length of the first lens (L1), the second lens (L2), and the third lens (L3), and f456 is a combined focal length of the fourth lens (L4), the fifth lens (L5), and the sixth lens (L6).

3. The optical system (100) of claim 1, wherein the optical system (100) further satisfies at least one of following conditional expressions:

$$2 < fmax/R11 < 3.5,$$

$$0.9 < fmax/R21 < 2.5,$$

$$3 < fmax/R22 < 7,$$

$$2 < fmax/R31 < 4,$$

$$-2.7 < fmax/R32 < -1.6,$$

$$1.3 < fmax/R42 < 3.5,$$

$$1.8 < fmax/R51 < 4,$$

$$0.4 < fmax/R52 < 2.4,$$

and

$$-2.3 < fmax/R61 < -0.8,$$

wherein, R11 is a radius of curvature of the object side surface (S1) of the first lens (L1) at the optical axis (O), R21 is a radius of curvature of the object side surface (S3) of the second lens (L2) at the optical axis (O), R22 is a radius of curvature of the imaging side surface (S4) of the second lens (L2) at the optical axis (O), R31 is a radius of curvature of the object side surface (S5) of the third lens (L3) at the optical axis (O), R32 is a radius of curvature of the imaging side surface (S6) of the third lens (L3) at the optical axis (O), R42 is a radius of curvature of the imaging side surface (S8) of the fourth lens (L4) at the optical axis (O), R51 is a radius of curvature of the object side surface (S9) of the fifth lens (L5) at the optical axis (O), R52 is a radius of curvature of the imaging side surface (S10) of the fifth lens (L5) at the optical axis (O), R61 is a radius of curvature of the object side surface (S11) of the sixth lens (L6) at the optical axis (O), and fmax is the maximum focal length of the optical system (100).

4. The optical system (100) of claim 1, wherein the optical system (100) further satisfies at least one of following conditional expressions:

$$1.6 < R21/R22 < 5,$$

$$-0.9 < R31/R32 < -0.5,$$

$$0.1 < R51/R52 < 1,$$

and

$$-1 < R11/R32 < -0.4,$$

wherein, R21 is a radius of curvature of the object side surface (S3) of the second lens (L2) at the optical axis (O), R22 is a radius of curvature of the imaging side surface (S4) of the second lens (L2) at the optical axis (O), R31 is a radius of curvature of the object side surface (S5) of the third lens (L3) at the optical axis (O), R32 is a radius of curvature of the imaging side surface (S6) of the third lens (L3) at the optical axis (O), R51 is a radius of curvature of the object side surface (S9) of the fifth lens (L5) at the optical axis (O), R52 is a radius of curvature of the imaging side surface (S10) of the fifth lens (L5) at the optical axis (O), and R11 is a radius of curvature of the object side surface (S1) of the first lens (L1) at the optical axis (O).

5. The optical system (100) of claim 1, wherein the optical system (100) further satisfies at least one of following conditional expressions:

$$0.7 < DLmax/TTL < 1,$$

$$0.8 < TTL/fmax < 1.3,$$

and

$$3.3 < TTL/ImgH < 6,$$

wherein, DLmax is the maximum distance along the optical axis (O) from the object side surface (S1) of the first lens (L1) to the imaging side surface (S12) of the sixth lens (L6), TTL is a distance along the optical axis (O) from the object side surface (S1) of the first lens (L1) to the image plane (IMG) of the optical system (100), fmax is the maximum focal length of the optical system (100), and ImgH is half of an image height corresponding to the maximum field of view of the optical system (100).

6. The optical system (100) of claim 1, wherein the optical system (100) further satisfies at least one of following conditional expressions:

$$0.8 < TD123/TD456 < 1.5,$$

and

$$1.1 < TTL/(TD123+TD456) < 1.7,$$

wherein, TTL is a distance along the optical axis (O) from the object side surface (S1) of the first lens (L1) to the image plane (IMG) of the optical system (100), TD123 is a distance from the object side surface (S1) of the first lens (L1) to the imaging side surface (S6) of the third lens (L3) along the optical axis (O), and TD456 is a distance from the object side surface (S7) of the fourth lens (L4) to the imaging side surface (S12) of the sixth lens (L6) along the optical axis (O).

7. The optical system (100) of claim 1, wherein the optical system (100) further satisfies at least one of following conditional expressions:

$$0.55 < SD11/ImgH < 1.1,$$

and

$$0.7 < SD62/ImgH < 1.2,$$

wherein, SD11 is half of the maximum effective aperture of the object side surface (S1) of the first lens (L1), SD62 is half of the maximum effective aperture of the imaging side surface (S12) of the sixth lens (L6), and ImgH is half of an image height corresponding to the maximum field of view of the optical system (100).

8. The optical system (100) of claim 1, wherein the optical system (100) further satisfies at least one of following conditional expressions:

$$0.8 < SD32/SD41 < 1.2,$$

and

$$0.7 < SD11/CT1 < 1.5,$$

wherein, SD32 is half of the maximum effective aperture of the imaging side surface (S6) of the third lens (L3), and SD41 is half of the maximum effective aperture of the object side surface (S7) of the fourth lens (L4), SD11 is the half of the maximum effective aperture of the object side surface (S1) of the first lens (L1), and CT1 is a thickness of the first lens (L1) at the optical axis (O).

9. The optical system (100) of claim 1, wherein the optical system (100) further satisfies at least one of following conditional expressions:

$$0.4 < CT123/\sum CT < 0.7,$$

$$0.3 < CT456/\sum CT < 0.6,$$

and

$$0.15 < CT5/\sum CT < 0.35,$$

wherein, CT123 is a sum of the thicknesses of the first lens (L1), the second lens (L2), and the third lens (L3) at the optical axis (O), CT456 is a sum of the thicknesses of the fourth lens (L4), the fifth lens (L5), and the sixth lens (L6) at the optical axis (O), $\Sigma$CT is a sum of the thicknesses of the first lens (L1), the second lens (L2), the third lens (L3), the fourth lens (L4), the fifth lens (L5), and the sixth lens (L6) at the optical axis (O), and CT5 is a thickness of the fifth lens (L5) at the optical axis (O).

10. The optical system (100) of claim 1, wherein the optical system (100) further satisfies at least one of following conditional expressions:

$$1.2 < CT5/CT6 < 4,$$

$$1.4<CT1/CT2<3.5,$$

$$0.7<CT3/CT2<3,$$

$$2<CT5/CT4<5,$$

and

$$0.5<CT4/CT6<1.1,$$

wherein, CT1 is a thickness of the first lens (L1) at the optical axis (O), CT2 is a thickness of the second lens (L2) at the optical axis (O), CT3 is a thickness of the third lens (L3) at the optical axis (O), CT4 is a thickness of the fourth lens (L4) at the optical axis (O), CT5 is a thickness of the fifth lens (L5) at the optical axis (O), and CT6 is a thickness of the sixth lens (L6) at the optical axis (O).

11. The optical system (100) of claim 1, wherein the optical system (100) further satisfies at least one of following conditional expressions:

$$1.35<fz1/fz2<2,$$

$$1.1<FNOz1/FNOz2<1.7,$$

and

$$2.0<Bz2/Bz1,$$

wherein, fz1 is a focal length of the optical system (100) in a near focus state, fz2 is a focal length of the optical system (100) in a far focus state, FNOz1 is the aperture number of the optical system (100) in the near focus state, FNOz2 is the aperture number of the optical system (100) in the far focus state, Bz1 is a distance along the optical axis (O) from the imaging side surface (S6) of the third lens (L3) to the object side surface (S7) of the fourth lens (L4) when the optical system (100) is in the near focus state, and Bz2 is a distance along the optical axis (O) from the imaging side surface (S6) of the third lens (L3) to the object side surface (S7) of the fourth lens (L4) when the optical system (100) is in the far focus state.

12. The optical system (100) of claim 1, wherein the optical system (100) further satisfies at least one of following conditional expressions:

$$0<fmax/|R12|<1.4,$$

$$0<fmax/|R41|<2,$$

and

$$2<|R62|/fmax<5,$$

wherein, fmax is the maximum focal length of the optical system (100), R12 is a radius of curvature of the imaging side surface (S2) of the first lens (L1) at the optical axis (O), R41 is a radius of curvature of the object side surface (S7) of the fourth lens (L4) at the optical axis (O), and R62 is a radius of curvature of the imaging side surface (S12) of the sixth lens (L6) at the optical axis (O).

13. The optical system (100) of claim 1, wherein the optical system (100) further satisfies following conditional expression:

$$0<R11/|R12|<0.5,$$

$$1.5 < |R41/R42|,$$

and

$$2.5 < |R62/R61| < 5.5,$$

wherein, R11 is a radius of curvature of the object side surface (S1) of the first lens (L1) at the optical axis (O), R12 is a radius of curvature of the imaging side surface (S2) of the first lens (L1) at the optical axis (O), R41 is a radius of curvature of the object side surface (S7) of the fourth lens (L4) at the optical axis (O), R42 is a radius of curvature of the imaging side surface (S8) of the fourth lens (L4) at the optical axis (O), R61 is a radius of curvature of the object side surface (S11) of the sixth lens (L6) at the optical axis (O), and R62 is a radius of curvature of the imaging side surface (S12) of the sixth lens (L6) at the optical axis (O).

14. An image module (200) comprising an imaging sensor (201) and the optical system (100) of any one of claims 1 to 13, wherein the imaging sensor (201) is arranged on the imaging side of the optical system (100).

15. An electronic device (300) comprising a housing (301) and an image module (200) of claim 14, wherein the image module (200) is arranged in the housing (301).

100

G1      G2

P1    STO  L1 L2  L3   L4   L5   L6  IR

SD41

SD32

O

SD11  S1 S2 S3 S4 S5 S6 S7 S8  S9   S10 S11  S12  SD62

IMG

## FIG.1A

**Spherical aberration**

650nm
610nm
555nm
510nm
470nm
435nm

**Astigmatism**
Image height (mm)

T  5.72

4.29

2.86

1.43

S (Sagittal)

T (Tanggential)

**Distortion**
Image height (mm)

5.72

4.29

555nm

2.86

1.43

-0.050  -0.025  0.0  0.025  0.050

Deviation of the
focus point (mm)

-0.100  -0.050  0.0  0.050  0.100

Deviation of the
focus point (mm)

-5.0  -2.5  0.0  2.5  5.0

Distortion (%)

## FIG.1B

100

FIG.2A

FIG.2B

## FIG.3A

## FIG.3B

**FIG.4A**

Spherical aberration

650nm
610nm
555nm
510nm
470nm
435nm

-0.10  -0.05  0.0  0.05  0.10
Deviation of the
focus point (mm)

Astigmatism
Image height (mm)

S (Sagittal)

T (Tanggential)

-0.100  -0.050  0.0  0.050  0.100
Deviation of the
focus point (mm)

Distortion
Image height (mm)

555nm

-5.0  -2.5  0.0  2.5  5.0
Distortion (%)

**FIG.4B**

100

FIG.5A

FIG.5B

100

FIG.6A

FIG.6B

100

FIG.7A

FIG.7B

100

## FIG.8A

## FIG.8B

FIG.9A

FIG.9B

100

# FIG.10A

# FIG.10B

**FIG.11**

**FIG.12**